# EUROPEAN PATENT SPECIFICATION

(11) **EP 3 564 660 B1**
(45) Date of publication and mention of the grant of the patent: **20.08.2025**
(21) Application number: 19172638.9
(22) Date of filing: 03.05.2019
(51) Int. Cl.: G01N 29/04, G01N 29/14, G01N 29/44, G01N 29/46

(54) **METHOD AND APPARATUS FOR ACOUSTIC EMISSIONS TESTING**
VERFAHREN UND VORRICHTUNG ZUR AKUSTISCHEN EMISSIONSÜBERPRÜFUNG
PROCÉDÉ ET APPAREIL DE TEST DES ÉMISSIONS ACOUSTIQUES

(30) Priority: 04.05.2018 US 201815971937
(43) Date of publication of application: 06.11.2019
(73) Proprietor: The Boeing Company, Arlington, VA 22202 (US)
(72) Inventor: TAT, Hong Hue, Chicago, IL Illinois 60606-1596 (US); WU, Yuan-Jye, Chicago, IL Illinois 60606-1596 (US); SCHAEFER, Joseph D., Chicago, IL Illinois 60606-1596 (US); KAO, Anne, Chicago, IL Illinois 60606-1596 (US); MATHEWS, Mary J., Chicago, IL Illinois 60606-1596 (US); PIKE, Matthew G., Chicago, IL Illinois 60606-1596 (US); PAUCA, Victor P., Chicago, IL Illinois 60606-1596 (US); LI, Rongzhong, Chicago, IL Illinois 60606-1596 (US)
(74) Representative: Morrall, Jonathan Ian McLachlan

(56) References cited:
- EP-A1- 3 244 204
- US-A1- 2008 059 086
- US-B1- 6 386 038
- LOUTAS T H ET AL: "Damage evolution in center-holed glass/polyester composites under quasi-static loading using time/frequency analysis of acoustic emission monitored waveforms", COMPOSITES SCIENCE AND TECHNOLOGY, ELSEVIER, AMSTERDAM, NL, vol. 66, no. 10, 1 August 2006 (2006-08-01), pages 1366 - 1375, XP027987937, ISSN: 0266-3538, [retrieved on 20060801]

## Description

### BACKGROUND INFORMATION

### 1. Field:

The present disclosure relates generally to acoustic emissions and, in particular, to detecting acoustic emissions from objects. Still more particularly, the present disclosure relates to a method and apparatus for analyzing acoustic emissions of objects to assess the structural integrity of these objects over time.

### 2. Background:

Acoustic emission is the radiation of acoustic waves in an object or material when the material undergoes a structural change. For example, without limitation, acoustic emissions may occur when a composite object undergoes a structural change. This structural change may take the form of a crack forming, a crack extending, a split forming, a split extending, delamination, some other type of structural change, or a combination thereof.

These acoustic waves may be detected using acoustic sensors that are used to generate data that can then be analyzed. However, identifying the nature or method of structural change with a desired level of accuracy using currently available methods for performing acoustic emissions detection and analysis may be more difficult, tedious, and time-consuming than desired. In some cases, identifying the nature or mode of structural change may not be possible using currently available methods.

Some currently available methods of acoustics emissions detection and testing may require that the signals generated based on the acoustic emissions detected be the result of a single type of structural event. However, some objects such as, but not limited to, composite objects, may simultaneously undergo multiple types of structural change. Some currently available methods of acoustic detection and testing may be unable to easily and quickly determine when multiple modes of structural change are occurring simultaneously. In particular, when multiple structural changes occur in an object during a given time interval, currently available methods of acoustic detection and testing may be unable to identify the specific modes of structural change. Therefore, it would be desirable to have a method and apparatus that take into account at least some of the issues discussed above, as well as other possible issues.

"Damage evolution in center-holed glass/polyester composites under quasi-static loading using time/frequency analysis of acoustic emission monitored waveforms" by Loutas T H et al states in its abstract: this work addresses and compares the application of advanced signal processing methodologies developed in two different labs for the analysis of the large number of acoustic emission (AE) data as obtained from the quasi-static tension tests of center-holed glass/polyester (Gl/Pe) composite materials; the event primary frequency technique and the wavelet-based AE analysis. Primary goal of the present study is to investigate the effectiveness of frequency-based methodologies in AE data analysis for damage evolution monitoring. Further on, the monitoring of the damage state and the identification of the different damage mechanisms appearing within the material structure during loading is also intended. Both technologies were applied to analyze the plethora of the recorded AE signals during the tests. The results are thoroughly discussed and an evaluation of the two methods for handling AE transients is attempted.

EP3244204 (A1) states in its abstract: a method and apparatus for analyzing an object using acoustic emissions. Load data is received for the object. Acoustic waveform data is received for the object from an acoustic sensing system. The acoustic waveform data represents acoustic emissions emanating from the object and is detected using the acoustic sensing system. A plurality of bins is created for the load data. A plurality of frequency distribution functions is generated for the plurality of bins using the acoustic waveform data. A set of learning algorithms is applied to the plurality of frequency distribution functions and the acoustic waveform data to generate an output that allows an operator to more easily and quickly assess a structural integrity of the object. US6386038 (B1) states in its abstract: the invented apparatus includes at least one acoustic sensor, a mapping unit, a controller, and a transducer. The sensor is coupled to an object to be inspected for damage, and generates a sensed signal based on acoustic signal occurring in the object under an applied load, which signal may or may not be the sound of damage occurring in the object. The mapping unit is coupled to receive the sensed signal from the sensor, and generates damage data based thereon. The controller is coupled to receive the damage data from the mapping unit. Initially, the apparatus is in a passive mode in which the apparatus senses an acoustic signal from the object. If the damage data indicates that the object has incurred possible damage in the passive mode, the controller switches to active mode and outputs induced signal data. The transducer is coupled to the object as well as the controller, and induces acoustic signal in the object, based on the induced signal data. The induced acoustic signal is detected by the sensor, mapped by the mapping unit, and supplied as damage data to the controller, after which the controller returns the apparatus to passive mode. If the damage data resulting from the induced acoustic signal indicates that the object has incurred actual damage, the controller can generate an alarm, a display of the damage, and/or store the damage data in a memory to provide a record of damage incurred by the object. The invention also includes related methods.

US 2008/059086 A1 states in its abstract: a significant number of rescue workers are killed or injured each year as they conduct searches within damaged or burning structures, unaware that the structure is unstable. The present invention provides a system and method for real-time detecting and monitoring structural instability that may lead to inevitable collapse of a structure. The system is capable of displaying data, including visual and/or audible signals, indicating structural instability. Additionally, the present invention is also directed to stability monitoring analysis processes for determining structural stability or instability.

### SUMMARY

In a first aspect, there is provided an apparatus according to claim 1. In a second aspect, there is provided a method according to claim 7.

Optional features are provided in the dependent claims.

The apparatus comprises an acoustic sensing system and an analyzer module. The acoustic sensing system is positioned relative to an object. The acoustic sensing system detects acoustic emissions and generates acoustic waveform data for the acoustic emissions detected. The analyzer module is implemented in a computer system that receives load data and the acoustic waveform data for the object, generates a plurality of frequency distribution functions using the acoustic waveform data, and generates a frequency distribution function time evolution image containing a plurality of points of each of the plurality of frequency distribution functions.

In an illustrative example, a method for analyzing an object using acoustic waves is presented. Load data for the object is received. Acoustic waveform data for the object is received from an acoustic sensing system, wherein the acoustic waveform data represents acoustic emissions emanating from the object and is detected using the acoustic sensing system. A plurality of frequency distribution functions is generated using the acoustic waveform data. A frequency distribution function time evolution image containing a plurality of points of each of the plurality of frequency distribution functions is generated.

According to the invention, a method is presented. Acoustic emissions radiating from an object are detected using an acoustic sensing system to generate acoustic waveform data. A plurality of frequency distribution functions are generated, by an analyzer module, using the acoustic waveform data, wherein each of the plurality of frequency distribution functions has an identifier of either a respective time or a respective load. An array is created that has a quantity of columns equivalent to a quantity of frequency distribution functions in the plurality of frequency distribution functions and a quantity of rows equivalent to a quantity of frequency bins in each frequency distribution function of the plurality of frequency distribution functions. The array is filled such that a plurality of points of each of the plurality of frequency distribution functions is contained within the array, in which the array allows the analyzer module to identify structural changes in the object previously unidentifiable by an operator using frequency plots containing a single point for each waveform of the acoustic waveform data.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a test environment in accordance with an illustrative embodiment;
**Figure 2** is an illustration of an object, an acoustic sensing system, and an analyzer module in the form of a block diagram in accordance with an illustrative embodiment;
**Figure 3** is an illustration of an isometric view of an aircraft in accordance with an illustrative embodiment;
**Figure 4** is an illustration of a process for analyzing an object using acoustic emissions in the form of a flowchart in accordance with an illustrative embodiment;
**Figure 5** is an illustration of a process for generating a plurality of frequency distribution functions in the form of a flowchart in accordance with an illustrative embodiment;
**Figure 6** is an illustration of one process, in the form of a flowchart, for applying a set of learning algorithms to a plurality of frequency distribution functions to generate an output in accordance with an illustrative embodiment;
**Figure 7** is an illustration of another process, in the form of a flowchart, for applying a set of learning algorithms to a plurality of frequency distribution functions to generate an output in accordance with an illustrative embodiment;
**Figure 8** is an illustration of a process for analyzing a composite object in an aircraft using acoustic emissions in the form of a flowchart in accordance with an illustrative embodiment;
**Figure 9** is an illustration of a data processing system in the form of a block diagram in accordance with an illustrative embodiment;
**Figure 10** is an illustration of an aircraft manufacturing and service method in the form of a block diagram in accordance with an illustrative embodiment;
**Figure 11** is illustration of an aircraft in the form of a block diagram in accordance with an illustrative embodiment;
**Figure 12** is an illustration of a frequency distribution function time evolution image in accordance with an illustrative embodiment;
**Figure 13** is an illustration of an object, an acoustic sensing system, and an analyzer module in the form of a block diagram in accordance with an illustrative embodiment;
**Figure 14** is an illustration of a difference in change graph that may be used to tune parameters in accordance with an illustrative embodiment;
**Figure 15** is an illustration of a frequency distribution function time evolution image beside a normalized loading curve in accordance with an illustrative embodiment;
**Figure 16** is an illustration of a plot of singular values from singular value decomposition of a frequency distribution function time evolution image in accordance with an illustrative embodiment;
**Figure 17** is an illustration of a flowchart of a method for analyzing an object using acoustic waves in accordance with an illustrative embodiment;
**Figure 18** is an illustration of a flowchart of a method for creating an array for analysis in accordance with an illustrative embodiment; and
**Figure 19** is an illustration of a flowchart of a method for turning parameters in accordance with an illustrative embodiment.

### DETAILED DESCRIPTION

The illustrative embodiments take into account different considerations. For example, the illustrative embodiments take into account that it may be desirable to have a method and apparatus for detecting and analyzing acoustic emissions from objects that enable the identification and classification of multiple structural events that are occurring simultaneously. In particular, the illustrative embodiments take into account that it may be desirable to have a method and apparatus for analyzing acoustic emissions relative to the load history of an object that allows for accurate correlation between acoustic waveforms and specific modes of structural change.

Thus, the illustrative embodiments provide a method and apparatus for analyzing an object using acoustic emissions.

In one illustrative example, acoustic emissions emanating from the object are detected using an acoustic sensing system to generate acoustic waveform data. The acoustic waveform data is received along with load data for the object. A plurality of bins is created for the load data. A plurality of frequency distribution functions is generated for the plurality of bins using the acoustic waveform data. A set of learning algorithms is applied to the plurality of frequency distribution functions to generate an output that allows an operator to more easily and quickly assess a structural integrity of the object.

In particular, the illustrative embodiments provide a method and apparatus that solves the challenges associated with determining when multiple modes of structural change occur in an object simultaneously. Further, the illustrative embodiments provide a method and apparatus that solves the challenges associated with identifying each specific mode of structural change that occurs in an object during a given time interval even when multiple modes of structural change occur during that time interval.

The illustrative embodiments take into account that in traditional frequency plots for acoustic emission data, such as point plots of maximum frequency versus time, some signal features are masked or lost. The illustrative embodiments take into account that unidentified peaks correlate to unidentified structural changes.

The illustrative embodiments provide a method and apparatus that identify structural changes previously unidentified by operators in conventional processes. The illustrative embodiments, in some cases, provide a method and apparatus to more efficiently use acoustic waveform data to identify previously unidentified structural changes. The illustrative embodiments provide a method and apparatus to more efficiently find patterns in acoustic waveform data to identify previously unidentified structural changes.

The illustrative embodiments provide a method and apparatus that will reduce testing costs and reduce cycle time for manufacturing components. The illustrative embodiments provide a method and apparatus that may be used in developing new materials. Behavioral characteristics and structural changes of the new materials identified by the illustrative embodiments will have greater certainty than conventional methods.

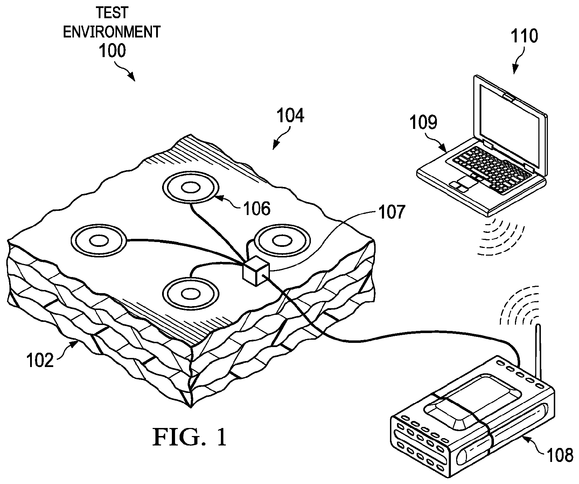

Referring now to the figures and, in particular, with reference to **Figure 1****,** an illustration of a test environment is depicted in accordance with an illustrative embodiment. In this illustrative example, test environment **100** may be used to perform testing of object **102.** In this illustrative example, object **102** takes the form of a composite object. However, in other illustrative examples, object **102** may be some other type of object, such as, but not limited to, a metallic object. Acoustic sensing system **104** is used to detect acoustic emissions emanating from object **102.** Acoustic sensing system **104** includes acoustic sensors **106,** signal conditioner **107,** and transmitter **108.** Each acoustic sensor of acoustic sensors **106** is positioned in contact with object **102** and is capable of detecting acoustic waves that may radiate through object **102** over time as a load is applied to object **102.** This load (not shown) may be constant over time, may vary over time, or may follow a pattern of constant intervals mixed with varying intervals over time.

In this illustrative example, acoustic sensors **106** generate acoustic emissions signals that are sent through signal conditioner **107** to transmitter **108.** Signal conditioner **107** may amplify, filter, both amplify and filter these acoustic emissions signals. Transmitter **108** may then convert the acoustic emissions signals into acoustic waveform data that is then wirelessly transmitted to analyzer module **109** for processing. In some cases, transmitter **108** includes a preamplifier or amplifier component that may adjust the gain of the acoustic emissions signals before conversion into the acoustic waveform data.

As depicted, analyzer module **109** is implemented in computer system **110.** In this illustrative example, transmitter **108** wirelessly sends the acoustic waveform data to analyzer module **109** in computer system **110.** In other illustrative examples, transmitter **108** may send the acoustic waveform data to analyzer module **109** over one or more wired connections. Analyzer module **109** receives both the acoustic waveform data and load data. The load data may include measurements of the load being applied to or the load being experienced by object **102** over time. Analyzer module **109** processes the acoustic waveform data and the load data in a manner that reduces the amount of time and computer processing resources needed to identify the nature and modes of structural change in object **102** over time based on the acoustic emissions detected. In particular, analyzer module **109** generates an output that allows an operator to more easily and quickly assess a structural integrity of object **102.**

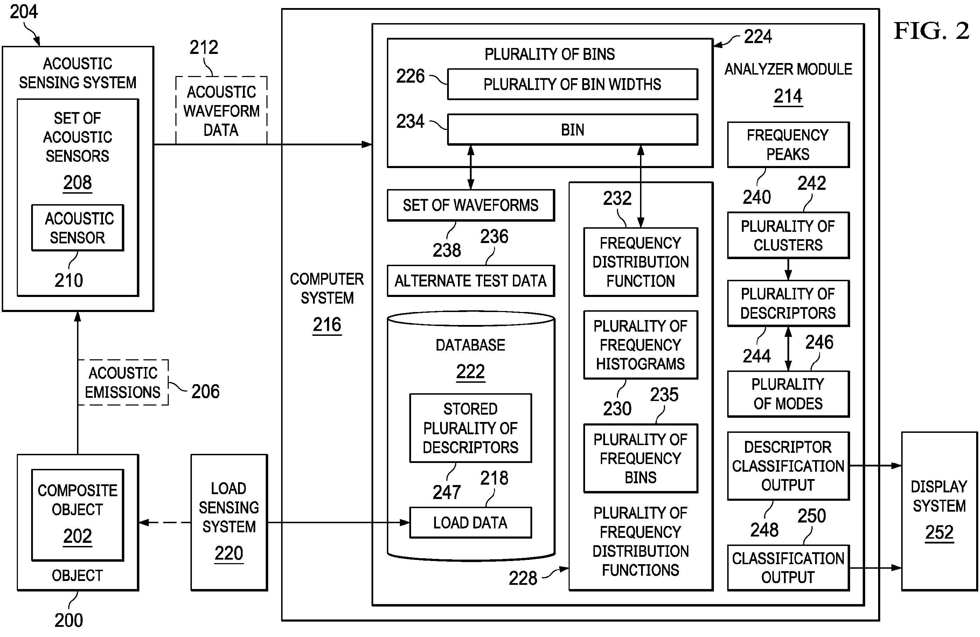

With reference now to **Figure 2****,** an illustration of an object, an acoustic sensing system, and an analyzer module is depicted in the form of a block diagram in accordance with an illustrative embodiment. Object **200** may take a number of different forms. In one illustrative example, object **200** takes the form of composite object **202.** However, in other illustrative examples, object **200** may take the form of a metal object, an object having at least a partial metallic composition, or some other type of object.

Depending on the implementation, object **200** may be at any stage in the lifecycle of object **200.** For example, without limitation, object **200** may be in a testing stage, in a system integration stage, in an in-service stage, in a maintenance stage, in a repair stage, or at some other point in time during the lifecycle of object **200.** In one illustrative example, composite object **202** may be a composite test coupon. Object **102** in **Figure 1** is an example of one implementation for object **200** in **Figure 2****.**

Acoustic sensing system **204** is used to detect acoustic emissions **206** from object **200** in response to the loading of object **200.** This loading may be performed in a number of different ways, depending on the implementation. For example, in some cases, an external load may be applied to object **200** for an extended period of time, while acoustic sensing system **204** is used to detect acoustic emissions **206** that result due to this loading. In other illustrative examples, the loading may be due to the integration of object **200** into a larger structure or system.

The loading of object **200** may affect the structural integrity of object **200** over time. For example, the loading may cause certain structural changes in object **200** that reduce the structural integrity of object **200.** These structural changes may include, but are not limited to, crack formation, splitting, the extension of cracks, the extension of splits, fiber breakage, delamination, some other type of undesired structural change, or a combination thereof.

Acoustic emissions **206** are acoustic waves that radiate through object **200** due to structural changes in object **200.** Acoustic sensing system **204** comprises set of acoustic sensors **208.** As used herein, a "set of" items may include one or more items. In this manner, set of acoustic sensors **208** may include one or more acoustic sensors.

Acoustic sensor **210** is an example of one acoustic sensor in set of acoustic sensors **208.** In one illustrative example, acoustic sensor **210** is positioned in contact with object **200** to detect acoustic emissions **206.**

Set of acoustic sensors **208** detect acoustic emissions **206** and generate acoustic waveform data **212** for acoustic emissions **206** detected. Acoustic waveform data **212** is sent to analyzer module **214.** Analyzer module **214** may receive acoustic waveform data **212** from acoustic sensing system **204** using any number of wired communications links, wireless communications links, other types of communications links, or a combination thereof. In this illustrative example, analyzer module **214** may be implemented in software, hardware, firmware, or a combination thereof. When software is used, the operations performed by analyzer module **214** may be implemented using, for example, without limitation, program code configured to run on a processor unit. When firmware is used, the operations performed by analyzer module **214** may be implemented using, for example, without limitation, program code and data and stored in persistent memory to run on a processor unit.

When hardware is employed, the hardware may include one or more circuits that operate to perform the operations of analyzer module **214.** Depending on the implementation, the hardware may take the form of a circuit system, an integrated circuit, an application specific integrated circuit (ASIC), a programmable logic device, or some other suitable type of hardware device configured to perform any number of operations.

A programmable logic device may be configured to perform certain operations. The device may be permanently configured to perform these operations or may be reconfigurable. A programmable logic device may take the form of, for example, without limitation, a programmable logic array, a programmable array logic, a field programmable logic array, a field programmable gate array, or some other type of programmable hardware device.

In this illustrative example, analyzer module **214** is implemented using computer system **216.** Analyzer module **109** implemented in computer system **110** in **Figure 1** may be an example of one implementation for analyzer module **214** implemented in computer system **216.** Computer system **216** may include a single computer or multiple computers in communication with each other.

In addition to receiving acoustic waveform data **212,** analyzer module **214** also receives load data **218.** In one illustrative example, load data **218** may be data generated by load sensing system **220.** Load sensing system **220** may include one or more load sensors that measure the loading of object **200** over time. In other illustrative examples, analyzer module **214** retrieves load data **218** from database **222.** For example, without limitation, load data **218** may be previously generated load data that was generated for an object similar to object **200** under the same or similar loading conditions.

Analyzer module **214** creates plurality of bins **224** for load data **218.** Plurality of bins **224** has plurality of bin widths **226.** In particular, each bin in plurality of bins **224** has a corresponding bin width in plurality of bin widths **226.** In one illustrative example, plurality bin widths **226** may be equal. However, in other illustrative examples, one or more bin widths of plurality of bin widths **226** may be different.

In some illustrative examples, plurality of bin widths **226** is a plurality of time-based bin widths. In other words, each bin of plurality of bins **224** may correspond to a time interval. In other illustrative examples, plurality of bin widths **226** is a plurality of load-based bin widths. In other words, each bin of plurality of bins **224** may correspond to a load interval.

Analyzer module **214** generates plurality of frequency distribution functions **228** using plurality of bins **224** and acoustic waveform data **212.** In one illustrative example, plurality of frequency distribution functions **228** takes the form of plurality of frequency histograms **230.**

Plurality of frequency distribution functions **228** includes one frequency distribution function for each bin in plurality of bins **224.** For example, analyzer module **214** generates frequency distribution function **232** for bin **234.** Bin **234** has a defined bin width that may be a defined time interval or a defined load interval.

In one illustrative example, analyzer module **214** creates frequency distribution function **232** by dividing a selected frequency range into plurality of frequency bins **235.** Depending on the implementation, plurality of frequency bins **235** may have the same or different bin widths. Each frequency bin in plurality of frequency bins **235** is used to hold a count and therefore can be incremented.

Analyzer module **214** then processes acoustic waveform data **212** relative to load data **218.** For example, for each bin in plurality of bins **224,** analyzer module **214** identifies a set of waveforms that fall within that bin using acoustic waveform data **212.** Thereafter, analyzer module **214** computes a Fast Fourier Transform for the set of waveforms identified for each bin in plurality of bins **224.**

As one illustrative example, analyzer module **214** identifies set of waveforms **238** that falls within bin **234** using acoustic waveform data **212.** In some illustrative examples, plurality of bin widths **226** for plurality of bins **224** may be selected such that at least one waveform falls entirely within each bin of plurality of bins **224.** Next, analyzer module **214** computes a Fast Fourier Transform for set of waveforms **238** that falls within bin **234.** Analyzer module **214** then identifies frequency peaks **240** for set of waveforms **238** based on the Fast Fourier Transform computed.

In one illustrative example, analyzer module **214** selects a defined number of frequency peaks for each waveform in set of waveforms **238.** As used herein, a "number of" items may include one or more items. In this manner, a defined number of frequency peaks may include one or more frequency peaks.

In some cases, the number of frequency peaks selected by analyzer module **214** may be, for example, without limitation, three, four, five, eight, or some other number of frequency peaks for each waveform in set of waveforms **238** based on the Fast Fourier Transformer computed for set of waveforms **238.** Analyzer module **214** increments a corresponding frequency bin in plurality of frequency bins **235** when a frequency peak that has been identified falls within the corresponding frequency bin. For example, if any of frequency peaks **240** falls within the frequency bin corresponding to the range of about 80 kilohertz to about 90 kilohertz, then the frequency bin is incremented by the total number of frequency peaks falling within this range. This process creates frequency distribution function **232** for bin **234.**

In other illustrative examples, plurality of frequency bins **235** may be accumulated differently. For example, a frequency bin in plurality of frequency bins **235** may be an accumulation of energy at that frequency bin, computed using acoustic waveform data **212.**

The process of creating frequency distribution function **232** for bin **234** is repeated for each of plurality of bins **224** to ultimately create plurality of frequency distribution functions **228.** Plurality of frequency distribution functions **228** provide an operator with an easy way to quickly assess the structural integrity of object **200.**

When object **200** is a test object, further processing of plurality of frequency distribution functions **228** is performed by analyzer module **214.** For example, without limitation, analyzer module **214** creates plurality of clusters **242** using plurality of frequency distribution functions **228.** Plurality of clusters **242** is a plurality of clusters of interest.

In one illustrative example, analyzer module **214** applies one or more unsupervised learning algorithms to plurality of frequency distribution functions **228** to establish plurality of clusters **242.** Each cluster in plurality of clusters **242** is a grouping of frequency distribution functions from plurality of frequency distribution functions **228.**

As used herein, an unsupervised learning algorithm is a machine learning algorithm for drawing inferences from datasets comprising data without labeled responses. One example of unsupervised learning is clustering. A clustering algorithm may be an algorithm for grouping a set of elements in such a way that elements in the same group, which may be referred to as a cluster, are more similar to each other than to those in other groups.

In these illustrative examples, analyzer module **214** may use a set of unsupervised learning algorithms to group frequency distribution functions in plurality of frequency distribution functions **228** to form plurality of clusters **242.** Depending on the implementation, a k-means clustering algorithm, a mixture model clustering algorithm, a hierarchical clustering algorithm, some other type of clustering algorithm, some other type of unsupervised learning algorithm, or a combination thereof may be used to identify plurality of clusters **242.** Each cluster in plurality of clusters **242** corresponds to a structural change that affects the structural integrity of object **200.** In one illustrative example, each cluster in plurality of clusters **242** corresponds to a different mode of structural change that reduces the structural integrity of object **200.**

In one illustrative example, analyzer module **214** identifies plurality of descriptors **244** for plurality of clusters **242.** A descriptor for a cluster may be a centroid, a mean, or some other type of representative frequency distribution function for the cluster. As one illustrative example, the descriptor may be the centroid frequency distribution function for that cluster.

Plurality of clusters **242** may be associated with a plurality of modes of structural change using alternate test data **236.** Alternate test data **236** may be data from which structural changes in object **200** may be readily identified. For example, alternate test data **236** may take the form of x-ray imaging data, ultrasound imaging data, infrared imaging data, modeling data, or some other type of data. The modeling data may be generated from a computer model.

As one illustrative example, without limitation, alternate test data **236** takes the form of in-situ x-ray data generated for object **200** during the loading of object **200.** Alternate test data **236** is then used to detect structural changes in object **200** and identify these structural changes as plurality of modes **246.** Each mode in plurality of modes **246** may be a different type of structural change. In some cases, each mode in plurality of modes **246** may be referred to as a mode of structural compromise.

For example, without limitation, when object **200** takes the form of a composite test coupon, plurality of modes **246** may include crack formation, crack extension, splitting, and split extension. In some cases, plurality of modes **246** may also include fiber breakage, delamination, or some other form of structural compromise.

Both plurality of modes **246** and plurality of clusters **242** are mapped back to load data **218** such that each cluster in plurality of clusters **242** substantially overlaps with a corresponding mode in plurality of modes **246.** In other words, plurality of modes **246** may be mapped backed to specific times, load conditions, or both using load data **218.**

Similarly, plurality of clusters **242** may be mapped back to specific times, load conditions, or both using load data **218.** For example, without limitation, each bin in plurality of bins **224** for load data **218** may be designated as holding one or more waveforms that belong to a particular cluster in plurality of clusters **242.**

In one illustrative example, each cluster of plurality of clusters **242** may substantially overlap, or overlap within selected tolerances, with a corresponding mode in plurality of modes **246** with respect to time. In this manner, each cluster in plurality of clusters **242** may be paired with or assigned to a corresponding mode in plurality of modes **246.** In one illustrative example, the descriptor corresponding to each cluster in plurality of clusters **242** is paired with a corresponding mode in plurality of modes **246.** In other words, plurality of descriptors **244** may be paired with plurality of modes **246.**

In one illustrative example, plurality of clusters **242** may include a first cluster having a first descriptor, a second cluster having a second descriptor, a third cluster having a third descriptor, and a fourth cluster having a fourth descriptor. In this illustrative example, the first cluster and the first descriptor represent a first mode of structural change. The second cluster and the second descriptor represent a second mode of structural change. The third cluster and the third descriptor represent a third mode of structural change. The fourth cluster and the fourth descriptor represent a fourth mode of structural change. Of course, in other illustrative examples, plurality of clusters **242** may include fewer than four clusters or more than four clusters.

Once each cluster in plurality of clusters **242** has been associated with a corresponding mode of structural change, plurality of descriptors **244** for plurality of clusters **242** is stored for future use. For example, plurality of descriptors **244** may be stored in database **222,** or some other type of data structure or data storage, along with the mode classification for each descriptor.

In one illustrative example, analyzer module **214** generates descriptor classification output **248** that identifies the pairing of each mode in plurality of modes **246** with a corresponding descriptor in plurality of descriptors **244.** Descriptor classification output **248** may be stored in database **222,** or in some other data structure or data storage, for future use. In this manner, descriptor classification output **248** establishes baseline data that may be used to evaluate the structural integrity of one or more parts that are structurally the same as or structurally similar to object **200.**

In other illustrative examples, object **200** may not be a test object. Rather, object **200** may be at an in-service stage, a maintenance stage, a repair stage, a certification stage, or some other type of stage in the lifecycle of object **200.** In these illustrative examples, once plurality of frequency distribution functions **228** has been generated, analyzer module **214** applies one or more supervised learning algorithms to plurality of frequency distribution functions **228.**

As used herein, a supervised learning algorithm is a machine learning algorithm for drawing inferences from labeled training data. In these illustrative examples, this labeled training data takes the form of descriptor classification output **248** that labels each descriptor in plurality of descriptors **244,** which corresponds with a cluster in plurality of clusters **242,** with a corresponding mode of plurality of modes **246.**

A support vector machine is an example of one type of supervised learning algorithm. For example, without limitation, a support vector machine may be applied to plurality of frequency distribution functions **228** and stored plurality of descriptors **247** to generate classification output **250.** Stored plurality of descriptors **247** is generated in a manner similar to plurality of descriptors **244.** Stored plurality of descriptors **247** may be stored in database **222** or some other type of data structure or data storage.

In particular, a binary decision is made for each bin in plurality of bins **224** based on stored plurality of descriptors **247.** More specifically, the frequency distribution function generated for each bin in plurality of bins **224** is analyzed relative to each descriptor in plurality of descriptors **244.** For example, without limitation, frequency distribution function **232** for bin **234** may be analyzed relative to each descriptor in stored plurality of descriptors **247.** A determination is made as to whether frequency distribution function **232** matches the descriptor within selected tolerances or not. If frequency distribution function **232** matches the descriptor within selected tolerances, then set of waveforms **238** that fall within bin **234** may be classified as representing the mode that corresponds to that descriptor. This decision is performed for each descriptor in stored plurality of descriptors **247.**

Because this type of binary decision is being made for each descriptor in stored plurality of descriptors **247,** the each bin in plurality of bins **224** may be classified as representing multiple modes of structural change. In this manner, the set of waveforms that fall within any given bin of plurality of bins **224** may be classified as representing one or more modes of structural change. In some cases, the set of waveforms in a particular bin may be determined to not represent any particular mode in plurality of modes **246.**

In one illustrative example, analyzer module **214** generates classification output **250** that includes a classification of each bin in plurality of bins **224** using one or more modes of plurality of modes **246** based on the analysis described above. In other illustrative examples, analyzer module **214** generates classification output **250** that identifies the classification of each waveform in acoustic waveform data **212** using one or more modes of plurality of modes **246.**

Thus, the illustrative embodiments provide an accurate and efficient method for assessing the structural integrity of object **200.** The information obtained based on this type of assessment may be used to then make decisions about object **200** with respect to certification, maintenance, repair, system integration, some other type of task, or a combination thereof.

The processing performed by analyzer module **214** may be easily tailored for different types of objects and loading conditions. As one illustrative example, plurality of bin widths **226** may be selected based on the type of loading of object **200.** For example, without limitation, when object **200** is loaded more quickly, acoustic emissions **206** may occur more rapidly. Plurality of bin widths **226** may be selected to create smaller bins to allow for clearer separation of events. However, when object **200** is loaded more slowly, acoustic emissions **206** may occur more slowly. Plurality of bin widths **226** may then be selected to create larger bins to thereby reduce the overall volume of data that needs to be processed. Further, in some illustrative examples, analyzer module **214** may be configured to display descriptor classification output **248,** classification output **250,** or both through a graphical user interface on display system **252.** In some cases, plurality of frequency distribution functions **228** may be displayed on display system **252.** In this manner, an operator may able to quickly and easily make decisions about object **200.**

The illustration of object **200,** acoustic sensing system **204,** and analyzer module **214** in **Figure 2** is not meant to imply physical or architectural limitations to the manner in which an illustrative embodiment may be implemented. Other components in addition to or in place of the ones illustrated may be used. Some components may be optional. Also, the blocks are presented to illustrate some functional components. One or more of these blocks may be combined, divided, or combined and divided into different blocks when implemented in an illustrative embodiment.

For example, without limitation, in some cases, acoustic sensing system **204** may include at least one signal conditioner (not shown), such as signal conditioner **107** in **Figure 1****,** and a transmitter (not shown), such as transmitter **108** in **Figure 1****.** As one illustrative example, a signal conditioner may be used to amplify and filter the frequency content of the acoustic emissions signal detected by acoustic sensor **210.** The acoustic emissions signal may then be converted into acoustic waveform data **212** by a transmitter sends acoustic waveform data **212** to analyzer module **214.** The transmitter may send acoustic waveform data **212** to analyzer module **214** using one or more wireless communications links, wired communications links, or other type of communications links.

In some cases, a single signal conditioner may be used for amplifying and filtering the set of acoustic emissions signals generated by set of acoustic sensors **208.** In other illustrative examples, each acoustic sensor in set of acoustic sensors **208** may be connected to a different signal conditioner. In still other illustrative examples, a signal conditioner may be integrated as part of each acoustic sensor in set of acoustic sensors **208.**

Further, although classification output **250** is described as being generated using one or more supervised learning algorithms, in other illustrative examples, a semi-supervised learning algorithm or a process that combines supervised and unsupervised learning may be used to generate classification output **250.** Still further, although descriptor classification output **248** is described as being generated using one or more unsupervised learning algorithms, in other illustrative examples, a semi-supervised learning algorithm or a process that combines supervised and unsupervised learning may be used to generate descriptor classification output **248.**

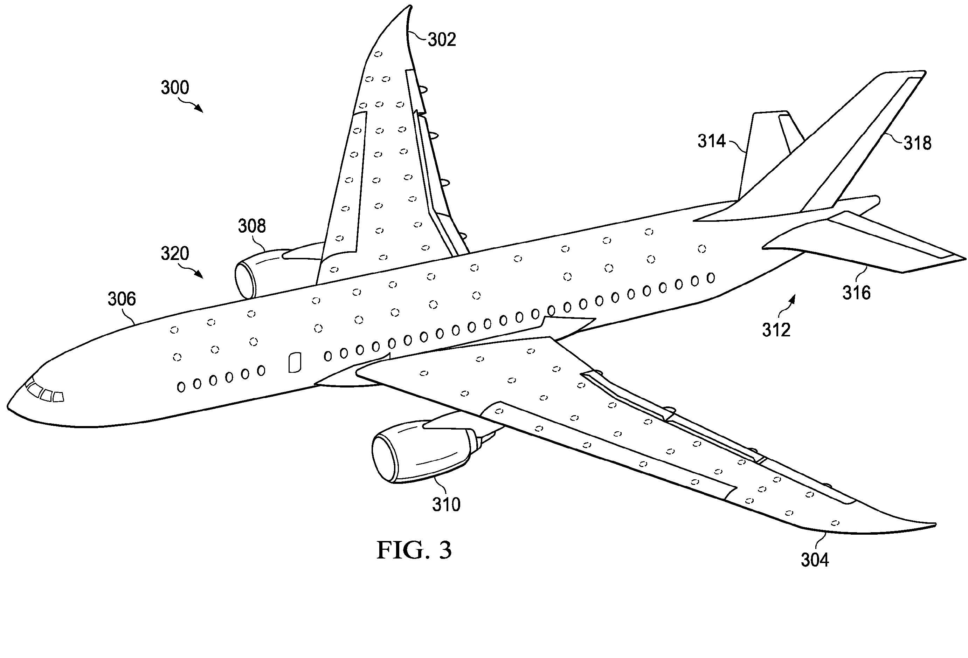

With reference now to **Figure 3****,** an illustration of an isometric view of an aircraft is depicted in accordance with an illustrative embodiment. In this illustrative example, aircraft **300** includes wing **302** and wing **304** attached to fuselage **306.** Aircraft **300** also includes engine **308** attached to wing **302** and engine **310** attached to wing **304.**

Further, aircraft **300** includes tail section **312.** Horizontal stabilizer **314,** horizontal stabilizer **316,** and vertical stabilizer **318** are attached to tail section **312.**

An acoustic sensing system (not shown), such as acoustic sensing system **204** in **Figure 2** or acoustic sensing system **104** in **Figure 1****,** may be positioned relative to aircraft **300** to monitor the acoustic emissions of various parts of aircraft **300** during the lifecycle of aircraft **300.** For example, without limitation, the acoustic sensing system may include various acoustic sensors (not shown) at locations **320** along aircraft **300.** Locations **320** may include locations that are in contact with a surface of a part of aircraft **300,** embedded within a part or structure of aircraft **300,** positioned near but not in contact with a part or structure of aircraft **300,** or a combination thereof.

At any stage during the lifecycle of aircraft **300,** the acoustic waveform data generated by the acoustic sensing system **204** may be collected and analyzed by analyzer module **214** in **Figure 2****.** In this manner, the structural integrity of the various parts or structures of aircraft **300** may be analyzed and any detected undesired structural changes may be classified.

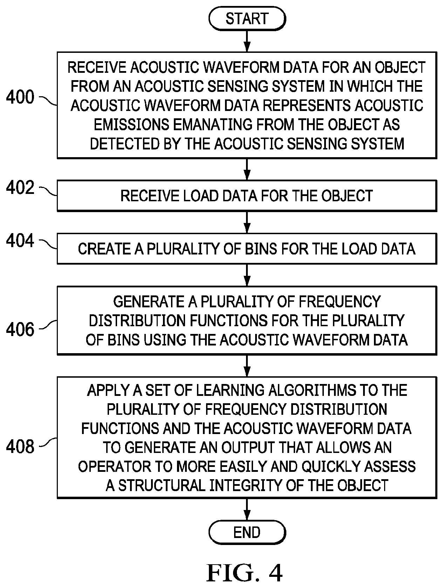

With reference now to **Figure 4****,** an illustration of a process for analyzing an object using acoustic emissions is depicted in the form of a flowchart in accordance with an illustrative embodiment. The process illustrated in **Figure 4** may be implemented by analyzer module **214** described in **Figure 2****.**

The process may begin by receiving acoustic waveform data for an object from an acoustic sensing system in which the acoustic waveform data represents acoustic emissions emanating from the object as detected by the acoustic sensing system (operation **400).** Next, load data for the object is received (operation **402).** Thereafter, a plurality of bins is created for the load data (operation **404).**

In operation **404,** depending on the implementation, the plurality of bins may be a plurality of time bins or a plurality of load bins. A plurality of frequency distribution functions is then generated for the plurality of bins using the acoustic waveform data (operation **406).** In operation **406,** a frequency distribution function is generated for each bin in the plurality of bins. In some illustrative examples, the plurality of frequency distribution functions take the form of a plurality of frequency histograms.

Thereafter, a set of learning algorithms is applied to the plurality of frequency distribution functions and the acoustic waveform data to generate an output that allows an operator to more easily and quickly assess a structural integrity of the object (operation **408),** with the process terminating thereafter. The process described in **Figure 4** may reduce the overall time, effort, and computer-based processing resources that are needed to accurately assess the structural integrity of the object when the object is subject to multiple modes of structural change occurring simultaneously.

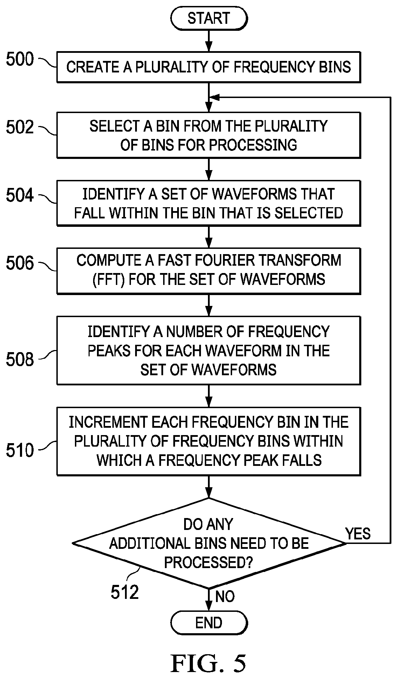

With reference now to **Figure 5****,** an illustration of a process for generating a plurality of frequency distribution functions is depicted in the form of a flowchart in accordance with an illustrative embodiment. The process illustrated in **Figure 5** may be implemented by analyzer module **214** described in **Figure 2****.** This process may be used to implement operation **406** in **Figure 4****.**

The process begins by creating a plurality of frequency bins (operation **500).** In operation **500,** each bin in the plurality of frequency bins may have a defined bin width. The bin widths of plurality of frequency bins may be the same or may be different. In one illustrative example, operation **500** is performed by dividing a selected frequency range into the plurality of frequency bins based on a defined frequency interval.

Thereafter, a bin is selected from the plurality of bins for processing (operation **502).** In operation **502,** the plurality of bins may be, for example, the plurality of bins created in operation **404** in **Figure 4****.**

Next, a set of waveforms that fall within the bin that is selected is identified (operation **504).** A Fast Fourier Transform (FFT) is computed for the set of waveforms (operation **506).** A number of frequency peaks is identified for each waveform in the set of waveforms (operation **508).** Each frequency bin in the plurality of frequency bins within which a frequency peak falls is incremented (operation **510).** In this manner, a frequency distribution function is created for the selected bin. Operation **510** is one example of how the plurality of frequency bins may be updated based on the Fast Fourier Transform computed in operation **506** and the number of frequency peaks identified for each waveform in the set of waveforms identified in operation **508.**

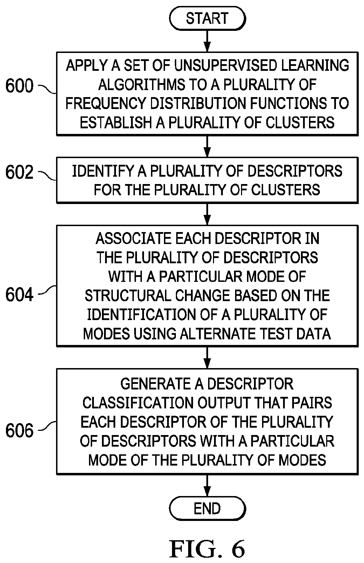

A determination is then made as to whether any additional bins need to be processed (operation **512).** If no additional bins need to be processed, the process terminates. Otherwise, the process returns to operation **502** described above. The process described in **Figure 5** results in the generation of a plurality of frequency distribution functions for the plurality of bins. With reference now to **Figure 6****,** an illustration of one process for applying a set of learning algorithms to a plurality of frequency distribution functions to generate an output is depicted in the form of a flowchart in accordance with an illustrative embodiment. The process illustrated in **Figure 6** may be implemented by analyzer module **214** in **Figure 2** and may be one example of how operation **408** in **Figure 4** may be implemented.

The process may begin by applying a set of unsupervised learning algorithms to a plurality of frequency distribution functions to establish a plurality of clusters (operation **600).** In operation **600,** the plurality of frequency distribution functions are grouped into clusters based on the unsupervised learning algorithms.

Next, a plurality of descriptors is identified for the plurality of clusters (operation **602).** In operation **602,** a descriptor is identified for each cluster. The descriptor is a representative frequency distribution function for the cluster. The descriptor for a particular cluster may be, for example, without limitation, a centroid frequency distribution function or a mean frequency distribution function for that cluster.

Thereafter, each descriptor in the plurality of descriptors is associated with a particular mode of structural change based on the identification of a plurality of modes using alternate test data (operation **604).** In operation **604,** the alternate test data may be, for example, x-ray data. Further, the plurality of modes may include, for example, without limitation, fiber breakage, splitting, split extension, delamination, crack formation, crack extension, or some other mode of structural change.

A descriptor classification output that pairs each descriptor of the plurality of descriptors with a particular mode of the plurality of modes is generated (operation **606),** with the process terminating thereafter. This descriptor classification output may then be used to perform evaluation of the structural integrity of other objects.

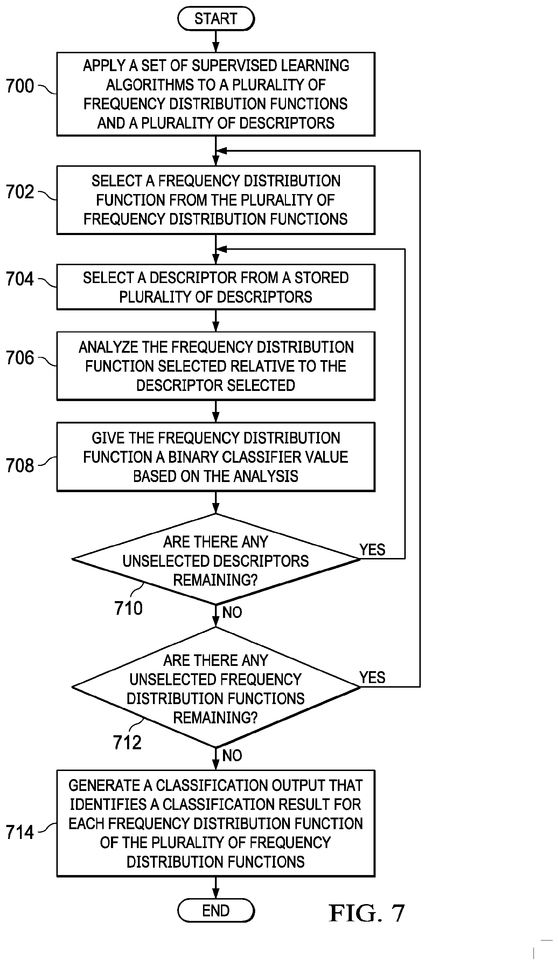

With reference now to **Figure 7****,** an illustration of another process for applying a set of learning algorithms to a plurality of frequency distribution functions to generate an output is depicted in the form of a flowchart in accordance with an illustrative embodiment. The process illustrated in **Figure 7** may be implemented by analyzer module **214** in **Figure 2** and may be another example of how operation **408** in **Figure 4** may be implemented.

The process may begin by applying a set of supervised learning algorithms to a plurality of frequency distribution functions and a plurality of descriptors (operation **700).** A frequency distribution function is selected from the plurality of frequency distribution functions (operation **702).** Each frequency distribution function of the plurality of frequency distribution functions represents a set of waveforms that fall within a particular time bin or load bin based on load data. Next, a descriptor is selected from a stored plurality of descriptors (operation **704).** In operation **704,** the stored plurality of descriptors may be previously identified for previously generated acoustic waveform data in a manner similar to the process described in **Figure 6****.** Each descriptor in the stored plurality of descriptors corresponds to a different mode of structural change.

Thereafter, the frequency distribution function selected is analyzed relative to the descriptor selected (operation **706).** For example, in operation **706,** the frequency distribution function may be compared to the descriptor, which may be a representative frequency distribution function for a cluster. Next, the frequency distribution function is given a binary classifier value based on the analysis (operation **708**). In operation **708,** the binary classifier value may be either a first value or a second value. For example, the first value may indicate that the frequency distribution function does match the descriptor within selected tolerances, while the second value may indicate that the frequency distribution function does not match the descriptor within selected tolerances. In some cases, the first value and the second value may be referred to as a positive classification value and a negative classification value, respectively. Thereafter, a determination is made as to whether any unselected descriptors remain (operation **710**). If any unselected descriptors remain, the process returns to operation **704** described above. Otherwise, a determination is made as to whether any unselected frequency distribution functions remain (operation **712**). If any unselected frequency distribution functions remain, the process returns to operation **702** described above.

Otherwise, the process generates a classification output that identifies a classification result for each frequency distribution function of the plurality of frequency distribution functions (operation **714),** with the process terminating thereafter. In operation **714,** the classification result for a particular frequency distribution function identifies whether that frequency distribution function represents zero, one, two, three, four, five, or some other number of modes of structural change.

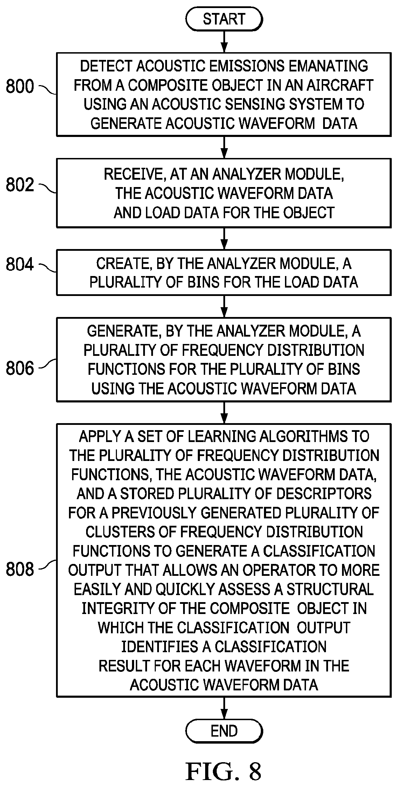

With reference now to **Figure 8****,** an illustration of a process for analyzing a composite object in an aircraft using acoustic emissions is depicted in the form of a flowchart in accordance with an illustrative embodiment. The process illustrated in **Figure 8** may be implemented using acoustic sensing system **204** and analyzer module **214** described in **Figure 2****.**

The process may begin by detecting acoustic emissions emanating from a composite object in an aircraft using an acoustic sensing system to generate acoustic waveform data **(800).** Next, the acoustic waveform data and load data for the object is received at an analyzer module **(802).**

Thereafter, a plurality of bins is created, by the analyzer module, for the load data (operation **804).** In operation **804,** depending on the implementation, the plurality of bins may be a plurality of time bins or a plurality of load bins.

A plurality of frequency distribution functions is then generated, by the analyzer module, for the plurality of bins using the acoustic waveform data (operation **806).** In operation **806,** a frequency distribution function is generated for each bin in the plurality of bins. In some illustrative examples, the plurality of frequency distribution functions take the form of a plurality of frequency histograms. Thereafter, a set of learning algorithms is applied to the plurality of frequency distribution functions, the acoustic waveform data, and a stored plurality of descriptors for a previously generated plurality of clusters of frequency distribution functions to generate a classification output that allows an operator to more easily and quickly assess a structural integrity of the composite object in which the classification output identifies a classification result for each waveform in the acoustic waveform data (operation **808),** with the process terminating thereafter. In operation **808,** the classification result may identify a particular waveform as representing zero, one, two, three, four, or some other number of modes of structural change.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

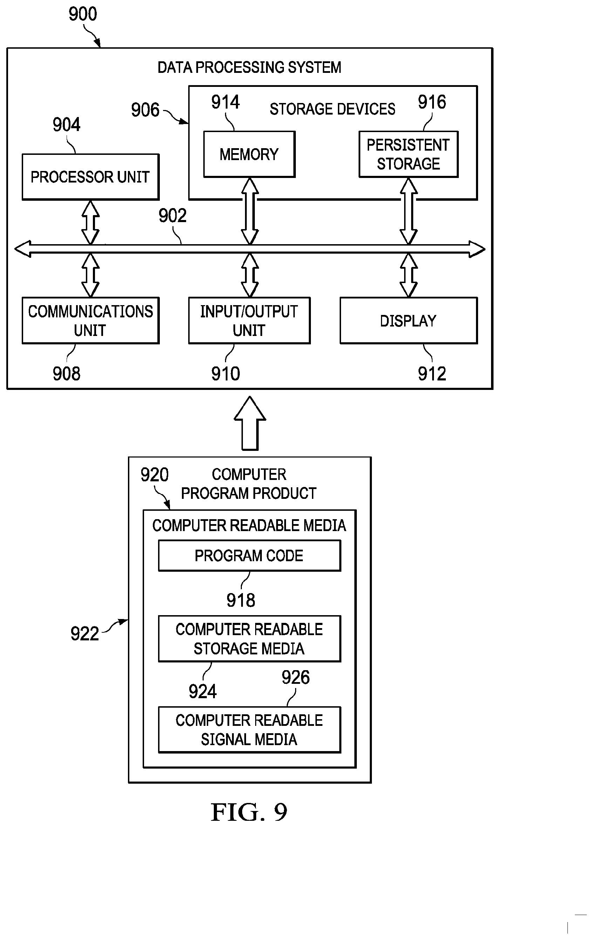

Turning now to **Figure 9****,** an illustration of a data processing system in the form of a block diagram is depicted in accordance with an illustrative embodiment. Data processing system **900** may be used to implement analyzer module **214,** computer system **216,** or both in **Figure 2****.** As depicted, data processing system **900** includes communications framework **902,** which provides communications between processor unit **904,** storage devices **906,** communications unit **908,** input/output unit **910,** and display **912.** In some cases, communications framework **902** may be implemented as a bus system.

Processor unit **904** is configured to execute instructions for software to perform a number of operations. Processor unit **904** may comprise a number of processors, a multi-processor core, and/or some other type of processor, depending on the implementation. In some cases, processor unit **904** may take the form of a hardware unit, such as a circuit system, an application specific integrated circuit (ASIC), a programmable logic device, or some other suitable type of hardware unit. Instructions for the operating system, applications, and/or programs run by processor unit **904** may be located in storage devices **906.** Storage devices **906** may be in communication with processor unit **904** through communications framework **902.** As used herein, a storage device, also referred to as a computer readable storage device, is any piece of hardware capable of storing information on a temporary and/or permanent basis. This information may include, but is not limited to, data, program code, and/or other information.

Memory **914** and persistent storage **916** are examples of storage devices **906.** Memory **914** may take the form of, for example, a random access memory or some type of volatile or non-volatile storage device. Persistent storage **916** may comprise any number of components or devices. For example, persistent storage **916** may comprise a hard drive, a flash memory, a rewritable optical disk, a rewritable magnetic tape, or some combination of the above. The media used by persistent storage **916** may or may not be removable.

Communications unit **908** allows data processing system **900** to communicate with other data processing systems and/or devices. Communications unit **908** may provide communications using physical and/or wireless communications links.

Input/output unit **910** allows input to be received from and output to be sent to other devices connected to data processing system **900.** For example, input/output unit **910** may allow user input to be received through a keyboard, a mouse, and/or some other type of input device. As another example, input/output unit **910** may allow output to be sent to a printer connected to data processing system **900.**

Display **912** is configured to display information to a user. Display **912** may comprise, for example, without limitation, a monitor, a touch screen, a laser display, a holographic display, a virtual display device, and/or some other type of display device.

In this illustrative example, the processes of the different illustrative embodiments may be performed by processor unit **904** using computer-implemented instructions. These instructions may be referred to as program code, computer usable program code, or computer readable program code and may be read and executed by one or more processors in processor unit **904.**

In these examples, program code **918** is located in a functional form on computer readable media **920,** which is selectively removable, and may be loaded onto or transferred to data processing system **900** for execution by processor unit **904.** Program code **918** and computer readable media **920** together form computer program product **922.** In this illustrative example, computer readable media **920** may be computer readable storage media **924** or computer readable signal media **926.**

Computer readable storage media **924** is a physical or tangible storage device used to store program code **918** rather than a medium that propagates or transmits program code **918.** Computer readable storage media **924** may be, for example, without limitation, an optical or magnetic disk or a persistent storage device that is connected to data processing system **900.**

Alternatively, program code **918** may be transferred to data processing system **900** using computer readable signal media **926.** Computer readable signal media **926** may be, for example, a propagated data signal containing program code **918.** This data signal may be an electromagnetic signal, an optical signal, and/or some other type of signal that can be transmitted over physical and/or wireless communications links.

The illustration of data processing system **900** in **Figure 9** is not meant to provide architectural limitations to the manner in which the illustrative embodiments may be implemented. The different illustrative embodiments may be implemented in a data processing system that includes components in addition to or in place of those illustrated for data processing system **900.** Further, components shown in **Figure 9** may be varied from the illustrative examples shown.

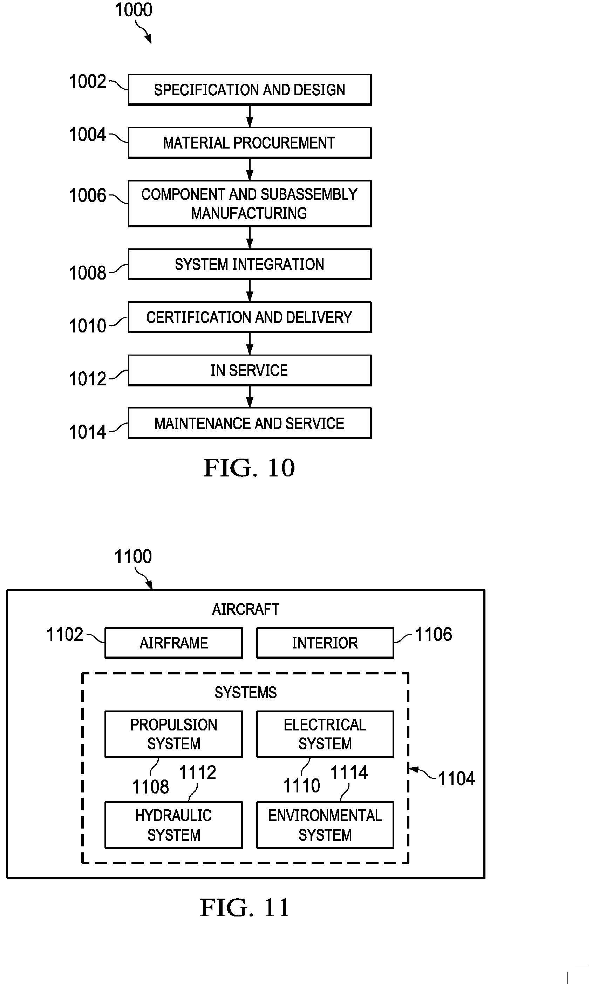

Illustrative embodiments of the disclosure may be described in the context of aircraft manufacturing and service method **1000** as shown in **Figure 10** and aircraft **1100** as shown in **Figure 11****.** Turning first to **Figure 10****,** an illustration of an aircraft manufacturing and service method is depicted in the form of a block diagram in accordance with an illustrative embodiment. During pre-production, aircraft manufacturing and service method **1000** may include specification and design **1002** of aircraft **1100** in **Figure 11** and material procurement **1004.** During production, component and subassembly manufacturing **1006** and system integration **1008** of aircraft **1100** in **Figure 11** takes place. Thereafter, aircraft **1100** in **Figure 11** may go through certification and delivery **1010** in order to be placed in service **1012.** While in service **1012** by a customer, aircraft **1100** in **Figure 11** is scheduled for routine maintenance and service **1014,** which may include modification, reconfiguration, refurbishment, and other maintenance or service.

Each of the processes of aircraft manufacturing and service method **1000** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on. With reference now to **Figure 11****,** an illustration of an aircraft is depicted in which an illustrative embodiment may be implemented. In this example, aircraft **1100** is produced by aircraft manufacturing and service method **1000** in **Figure 10** and may include airframe **1102** with systems **1104** and interior **1106.** Examples of systems **1104** include one or more of propulsion system **1108,** electrical system **1110,** hydraulic system **1112,** and environmental system **1114.** Any number of other systems may be included. Although an aerospace example is shown, different illustrative embodiments may be applied to other industries, such as the automotive industry. Apparatuses and methods embodied herein may be employed during at least one of the stages of aircraft manufacturing and service method **1000** in **Figure 10****.** In particular, acoustic sensing system **204** and analyzer module **214** from **Figure 2** may be used during any one of the stages of aircraft manufacturing and service method **1000.**

For example, without limitation, acoustic sensing system **204** from **Figure 2** may be used to detect acoustic emissions from various parts in aircraft **1100** during at least one of component and subassembly manufacturing **1006,** system integration **1008,** in service **1012,** routine maintenance and service **1014,** or some other stage of aircraft manufacturing and service method **1000.** Still further, analyzer module **214** from **Figure 2** may be used to analyze detected acoustic emissions during at least one of component and subassembly manufacturing **1006,** system integration **1008,** in service **1012,** routine maintenance and service **1014,** or some other stage of aircraft manufacturing and service method **1000.**

In one illustrative example, components or subassemblies produced in component and subassembly manufacturing **1006** in **Figure 10** may be fabricated or manufactured in a manner similar to components or subassemblies produced while aircraft **1100** is in service **1012** in **Figure 10****.** As yet another example, one or more apparatus embodiments, method embodiments, or a combination thereof may be utilized during production stages, such as component and subassembly manufacturing **1006** and system integration **1008** in **Figure 10****.** One or more apparatus embodiments, method embodiments, or a combination thereof may be utilized while aircraft **1100** is in service **1012** and/or during maintenance and service **1014** in **Figure 10****.** The use of a number of the different illustrative embodiments may substantially expedite the assembly of and/or reduce the cost of aircraft **1100.**

An apparatus comprises an acoustic sensing system and an analyzer module. The acoustic sensing system is positioned relative to an object. The acoustic sensing system detects acoustic emissions and generates acoustic waveform data for the acoustic emissions detected. The analyzer module is implemented in a computer system. The analyzer module receives load data and the acoustic waveform data for the object, creates a plurality of bins for the load data, generates a plurality of frequency distribution functions for the plurality of bins using the acoustic waveform data, and applies a set of learning algorithms to the plurality of frequency distribution functions and the acoustic waveform data to generate an output that allows an operator to more easily and quickly assess a structural integrity of the object.

In some illustrative examples, an acoustic sensor positioned in contact with the object. In some illustrative examples, the set of learning algorithms includes either a set of unsupervised learning algorithms or a set of supervised learning algorithms. In some illustrative examples, the load data is either retrieved from a database or received from a load sensing system that measures a loading of the object as the acoustic waveform data is generated.

In some illustrative examples, the plurality of bins have a plurality of bin widths and wherein a bin width in the plurality of bin widths is either a time interval or a load interval. In some illustrative examples, each frequency distribution function in the plurality of frequency distribution functions has a plurality of bin widths in which each bin width of the plurality of bin widths is a defined frequency interval. In some illustrative examples, each frequency distribution function in the plurality of frequency distribution functions comprises a plurality of frequency bins and wherein a frequency bin in the plurality of frequency bins includes either a count of a number of frequency peaks that fall within the frequency bin or an accumulation of energy at the frequency bin computed using the acoustic waveform data. In some illustrative examples, the output identifies a plurality of clusters of the plurality of frequency distribution functions. In these illustrative examples, the plurality of clusters comprises: a first cluster representing a first mode of structural change; a second cluster representing a second mode of structural change; a third cluster representing a third mode of structural change; and a fourth cluster representing a fourth mode of structural change.

In some illustrative examples, the analyzer module applies the set of learning algorithms to the plurality of frequency distribution functions to establish a plurality of clusters and to identify a plurality of descriptors for the plurality of clusters. In some of these illustrative examples, the plurality of clusters is analyzed with alternate test data to associate each descriptor in the plurality of descriptors with a different mode of structural change and wherein the alternate test data is selected from one of x-ray imaging data, ultrasound imaging data, infrared imaging data, and modeling data. In some of these illustrative examples, the analyzer module generates a descriptor classification output that associates a mode of structural change with the each descriptor in the plurality of descriptors and wherein the descriptor classification output is stored in a database for future use in evaluating a structural integrity of a part during at least one stage in a lifecycle of the part.

A method is provided for analyzing an object using acoustic waves. Load data is received for the object. Acoustic waveform data is received for the object from an acoustic sensing system. The acoustic waveform data represents acoustic emissions emanating from the object and is detected using the acoustic sensing system. A plurality of bins is created for the load data. A plurality of frequency distribution functions is generated for the plurality of bins using the acoustic waveform data. A set of learning algorithms is applied to the plurality of frequency distribution functions and the acoustic waveform data to generate an output that allows an operator to more easily and quickly assess a structural integrity of the object. In some illustrative examples, the method further comprises detecting, by the acoustic sensing system, acoustic waves radiating from the object using at least one acoustic sensor to generate an acoustic emissions signal; and converting the acoustic emissions signal into the acoustic waveform data.

In some illustrative examples, creating the plurality of bins comprises: identifying a plurality of bin widths for the plurality of bins, wherein a bin width in the plurality of bin widths is either a defined time interval or a defined load interval; and identifying a set of waveforms in the acoustic waveform data that fall within each bin of the plurality of bins. In some of these illustrative examples, generating the plurality of frequency distribution functions comprises: dividing a selected frequency range into a plurality of frequency bins based on at least one defined frequency interval. In some of these illustrative examples, generating the plurality of frequency distribution functions further comprises: computing a Fast Fourier Transform for the set of waveforms that fall within a bin selected from the plurality of bins; and updating the plurality of frequency bins in a frequency distribution function for the bin based on the Fast Fourier Transform. In some of these illustrative examples, updating the plurality of frequency bins comprises: selecting a number of frequency peaks for each waveform in the set of waveforms; and incrementing a frequency bin in the plurality of frequency bins when a frequency peak in the number of frequency peaks has a frequency that falls within the frequency bin.

In some illustrative examples, applying the set of learning algorithms comprises: applying a set of unsupervised learning algorithms to the plurality of frequency distribution functions and the acoustic waveform data to establish a plurality of clusters; identifying a plurality of descriptors for the plurality of clusters; and generating a descriptor classification output that classifies each descriptor in the plurality of descriptors as representing a different mode of structural change based on a plurality of modes identified using alternate test data. In some illustrative examples, applying the set of learning algorithms comprises: applying a set of supervised learning algorithms to the plurality of frequency distribution functions, the acoustic waveform data, and a stored plurality of descriptors; and generating a classification result for each frequency distribution function of the plurality of frequency distribution functions.

A method is provided for monitoring a composite object in an aircraft during at least one stage in a lifecycle of the aircraft. Acoustics emissions radiating from the composite object are detected using an acoustic sensing system to generate acoustic waveform data. An analyzer module receives the acoustic waveform data and load data for the composite object. The analyzer module creates a plurality of bins for the load data. A set of waveforms in the acoustic waveform data falls within a corresponding bin in the plurality of bins. The analyzer module generates a plurality of frequency distribution functions for the plurality of bins using the acoustic waveform data. A set of supervised learning algorithms is applied to the plurality of frequency distribution functions, the acoustic waveform data, and a stored plurality of descriptors to generate a classification output that identifies a classification result for each frequency distribution function in the plurality of frequency distribution functions. The classification output allows an operator to more easily and quickly assess a structural integrity of the composite object.

In some illustrative examples, applying the set of supervised learning algorithms to the plurality of frequency distribution functions, the acoustic waveform data, and the stored plurality of descriptors to generate the classification output comprises: generating the classification result for a selected frequency distribution function in the plurality of frequency distribution functions by comparing the selected frequency distribution function to each of the stored plurality of descriptors, wherein the classification result identifies whether the selected frequency distribution function, and thereby a corresponding set of waveforms in the acoustic waveform data, represents zero or more modes of structural change.

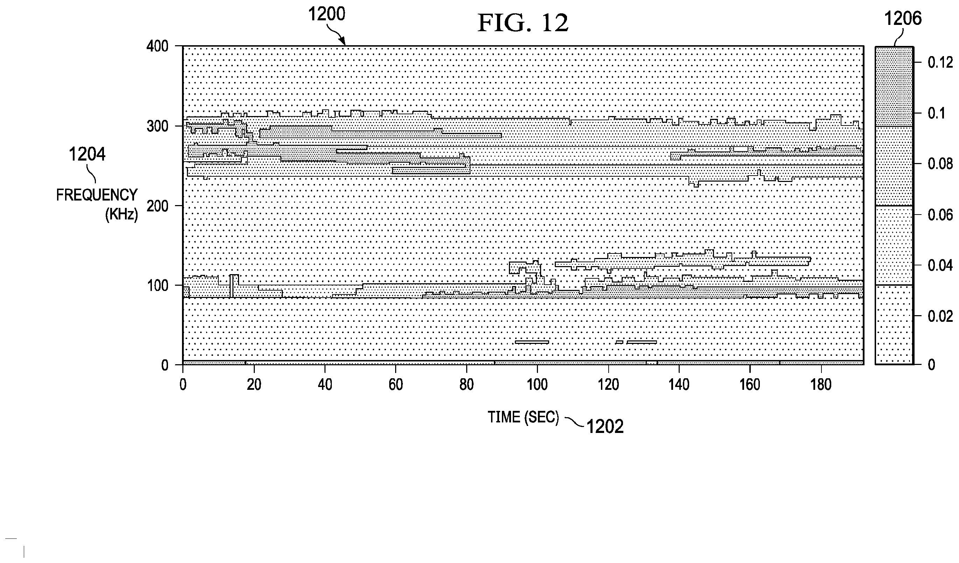

Turning now to **Figure 12****,** an illustration of a frequency distribution function time evolution image is depicted in accordance with an illustrative embodiment. Frequency distribution function time evolution image **1200** is an example of an image formed with a plurality of points of each of plurality of frequency distribution functions **228** of **Figure 2****.** As used herein, a "plurality" of items is more than one item. For example, a plurality of points is more than one point. When a plurality of points of each of plurality of frequency distribution functions **228** is used to form frequency distribution function time evolution image **1200,** more than one point of each of plurality of frequency distribution functions **228** is used to form frequency distribution function time evolution image **1200.** In some illustrative examples, frequency distribution function time evolution image **1200** is an example of an image formed with all data of each of plurality of frequency distribution functions **228** of **Figure 2****.** Frequency distribution function time evolution image **1200** may be used to tune parameters used to create plurality of frequency distribution functions **228** of **Figure 2****.** Frequency distribution function time evolution image **1200** may be used to determine changes to an object or assess a structural integrity of the object, such as object **200** of **Figure 2****.** Frequency distribution function time evolution image **1200** has x-axis **1202** and y-axis **1204.** Y-axis **1204** is a frequency. As depicted, x-axis **1202** is time. In other illustrative examples, x-axis **1202** is load.

Legend **1206** identifies the correlation between amplitude and color for each pixel of frequency distribution function time evolution image **1200.** Each column of frequency distribution function time evolution image **1200** contains the data of a single frequency distribution function.

In some illustrative examples, it is desirable to identify values for at least one of plurality of bin widths **226,** plurality of frequency bins **235,** a quantity of frequency peaks in frequency peaks **240** of **Figure 2****,** and a quantity of plurality of clusters **242** of **Figure 2****.** The illustration of object **200,** acoustic sensing system **204,** and analyzer module **214** in **Figure 2** is not meant to imply physical or architectural limitations to the manner in which an illustrative embodiment may be implemented. The different components shown in **Figures 1-3** may be combined with components in **Figures 12-16****,** used with components in **Figures 12-16****,** or a combination of the two.

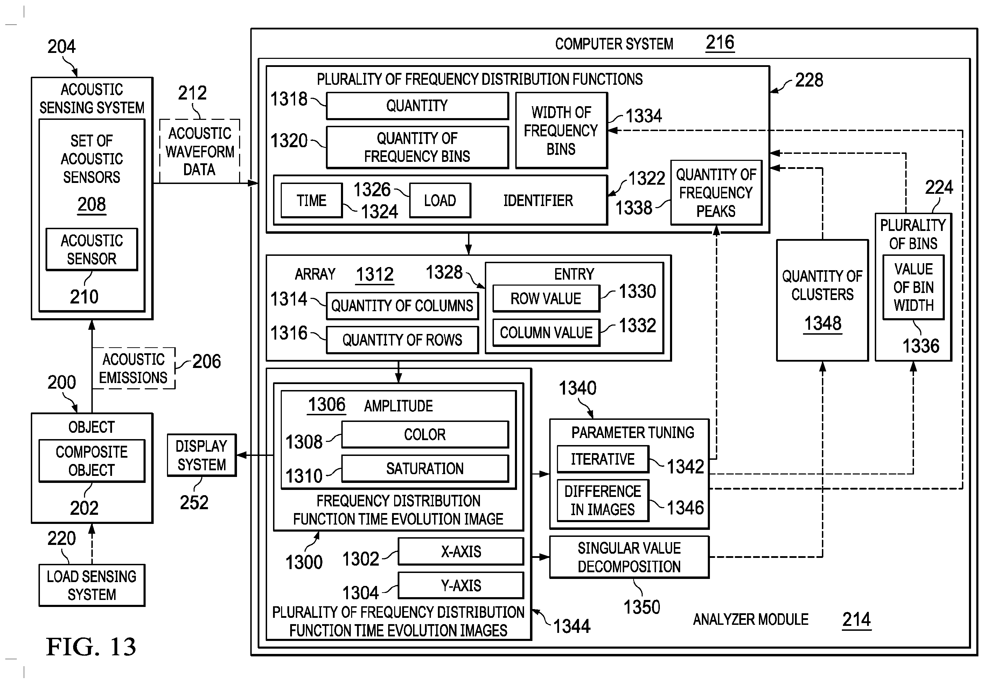

Turning now to **Figure 13****,** an illustration of an object, an acoustic sensing system, and an analyzer module in the form of a block diagram is depicted in accordance with an illustrative embodiment. **Figure 13** includes object **200,** acoustic sensing system **204,** and analyzer module **214** previously shown in **Figure 2****.** **Figure 13** also contains components used in forming or analyzing components of **Figure 2****.**

In some illustrative examples, analyzer module **214** generates frequency distribution function time evolution image **1300** using acoustic waveform data **212** for object **200.** In some illustrative examples, frequency distribution function time evolution image **1300** is displayed on display system **252.** When displayed, frequency distribution function time evolution image **1300** allows an operator to assess a structural integrity of object **200.**

Data of each of plurality of frequency distribution functions **228** is contained in frequency distribution function time evolution image **1300.** Frequency distribution function time evolution image **1200** of **Figure 12** is a physical implementation of frequency distribution function time evolution image **1300.** Frequency distribution function time evolution image **1300** has x-axis **1302** of either time or load. Frequency distribution function time evolution image **1300** has y-axis **1304** of frequency. Frequency distribution function time evolution image **1300** identifies amplitude **1306** using one of color **1308** or saturation **1310.**

Frequency distribution function time evolution image **1300** is a display of array **1312.** Array **1312** has quantity of columns **1314** and quantity of rows **1316.** Array **1312** has quantity of columns **1314** equivalent to quantity **1318** of frequency distribution functions in plurality of frequency distribution functions **228.** Array **1312** has quantity of rows **1316** equivalent to quantity of frequency bins **1320** in each frequency distribution function of plurality of frequency distribution functions **228.** Each frequency distribution function of plurality of frequency distribution functions **228** has identifier **1322.** Identifier **1322** is a unique range to a respective frequency distribution function of plurality of frequency distribution functions **228.** This range may be expressed as either time **1324** or load **1326.**

When identifier **1322** is time **1324,** plurality of bin widths **226** of **Figure 2** is a plurality of time-based bin widths. In other words, each bin of plurality of bins **224** of **Figure 2** may correspond to a time interval. When identifier **1322** is load **1326,** plurality of bin widths **226** of **Figure 2** is a plurality of load-based bin widths.

Array **1312** is filled such that a plurality of points of each of plurality of frequency distribution functions **228** is contained within array **1312.** In some illustrative examples, array **1312** is filled such that all data of each of plurality of frequency distribution functions **228** is contained with array **1312.** Array **1312** allows analyzer module **214** to identify structural changes in object **200** previously unidentifiable by an operator using frequency plots containing a single point extracted from each waveform of acoustic waveform data **212.**

Each entry of array **1312** correlates to a sample of one of the respective frequency distribution functions of plurality of frequency distribution functions **228.** Entry **1328** has row value **1330** and column value **1332.** Row value **1330** indicates the row for entry **1328.** Column value **1332** indicates the column for entry **1328.** When row value **1330** is the xth row and column value **1332** is the yth column, entry **1328** contains the value of the yth frequency bin of the xth frequency distribution function.

Plurality of frequency distribution functions **228** is created using parameters including width of frequency bins **1334,** value of bin width **1336,** and quantity of frequency peaks **1338.** In some illustrative examples, at least one of width of frequency bins **1334,** value of bin width **1336,** and quantity of frequency peaks **1338** is selected by an operator.

Each of width of frequency bins **1334,** value of bin width **1336,** and quantity of frequency peaks **1338** may be tuned using parameter tuning **1340.** Parameter tuning **1340** is iterative **1342** and may be referred to as iterative parameter tuning.

In some illustrative examples, at least one of width of frequency bins **1334,** value of bin width **1336,** and quantity of frequency peaks **1338** is identified using parameter tuning **1340** and plurality of frequency distribution function time evolution images **1344** generated from acoustic waveform data **212.** Parameter tuning **1340** generates plurality of frequency distribution function time evolution images **1344** for a plurality of values of a parameter of interest. Difference in images **1346** is determined between each successive pair of plurality of frequency distribution function time evolution images **1344.** A quantity for the parameter of interest is selected from difference in images **1346.**

In some illustrative examples, a quantity for a parameter of interest is selected from a range of operator provided values. For example, an operator may provide a range of values for each of width of frequency bins **1334,** value of bin width **1336,** and quantity of frequency peaks **1338** to receive parameter tuning **1340.** Parameter tuning **1340** is performed by generating plurality of frequency distribution function time evolution images **1344** for every combination of values within the provided ranges for the parameters. When only a single parameter of interest receives parameter tuning **1340,** plurality of frequency distribution function time evolution images **1344** is generated using each value in the respective range of values for the parameter of interest.

In some illustrative examples, two parameters of width of frequency bins **1334,** value of bin width **1336,** and quantity of frequency peaks **1338** are tuned using parameter tuning **1340.**

In these illustrative examples, the third parameter is kept at a constant value. After tuning the two parameters, the two values determined through parameter tuning **1340** are used to tune the last parameter using parameter tuning **1340.**

Width of frequency bins **1334,** value of bin width **1336,** and quantity of frequency peaks **1338** may be tuned using parameter tuning **1340** in any desirable order. In some illustrative examples, the order for parameter tuning **1340** is influenced by the material forming object **200.** In some illustrative examples, a desirable range for at least one of width of frequency bins **1334,** value of bin width **1336,** or quantity of frequency peaks **1338** is affected by the material of object **200.** In some illustrative examples, the size of a range for at least one of width of frequency bins **1334,** value of bin width **1336,** or quantity of frequency peaks **1338** is affected by the material of object **200.** For example, when object **200** is composite object **202,** acoustic emissions have a frequency in the range of 100-1000 kHz. Due to the acoustic emissions frequency range of composite object **202,** a range for width of frequency bins **1334** is limited. In some illustrative examples, when object **200** is composite object **202,** width of frequency bins **1334** is tuned after tuning value of bin width **1336** and quantity of frequency peaks **1338** using parameter tuning **1340.** In some of these illustrative examples, width of frequency bins **1334** is set at a value in the range of 20-50 kHz to initially tune value of bin width **1336** and quantity of frequency peaks **1338.**

In some illustrative examples, a quantity for a parameter of interest is selected within a difference in terms of percentage at a steady state condition. For example, the steady state condition may be 5% difference between a pair of successive images. As another example, the steady state condition may be 13% difference between a pair of successive images. In some illustrative examples, a quantity for a parameter of interest is selected when the change is within 10% of a change of steady state. For example, if the steady state condition is 8% difference between a pair of successive images, a value for the parameter of interest may be selected when the difference value is between 18% and the steady state of 8%. As another example, if the steady state condition is 20% difference between a pair of successive images, a value for the parameter of interest may be selected when the difference value is between 30% and the steady state of 20%. In some illustrative examples, analyzer module **214** selects quantity of clusters **1348.** In some illustrative examples, analyzer module **214** identifies quantity of clusters **1348** using singular value decomposition **1350** of frequency distribution function time evolution image **1300.** In some illustrative examples, determining quantity of clusters **1348** comprises selecting quantity of clusters **1348** from entries within a curved portion of a plot of the singular values from singular value decomposition **1350** on frequency distribution function time evolution image **1300.**

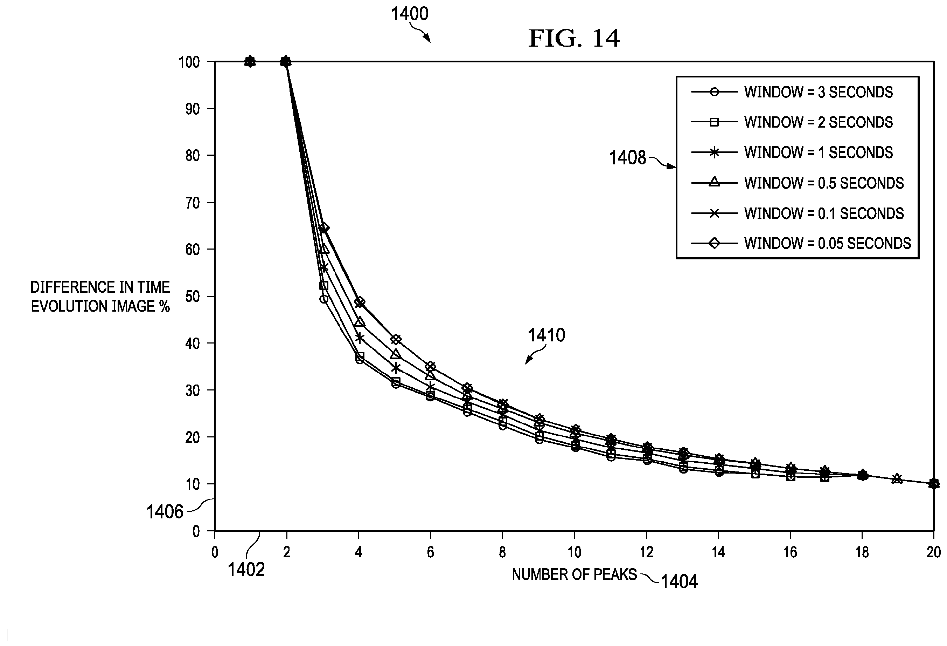

Turning now to **Figure 14****,** an illustration of a difference in change graph that may be used to tune parameters is depicted in accordance with an illustrative embodiment. Difference in change graph **1400** is a physical illustration of difference in images **1346** of **Figure 13****.** Difference in change graph **1400** is an example of a graph used in parameter tuning **1340** of **Figure 13****.** Any desirable parameter of width of frequency bins **1334,** value of bin width **1336,** or quantity of frequency peaks **1338** of **Figure 13** may be tuned using a difference in change graph, such as difference in change graph **1400.**

As depicted, difference in change graph **1400** is a physical implementation of a graph that may be used to tune quantity of frequency peaks **1338** of **Figure 13****.** Difference in change graph **1400** has x-axis **1402** of quantity of peaks **1404.** Difference in change graph **1400** has y-axis **1406** of difference in change between successive frequency distribution function time evolution images.

In difference in change graph **1400,** legend **1408** shows the length of time window for testing. The length of time window is a width of the plurality of frequency bins, such as width of frequency bins **1334** of **Figure 13****.** The length of time window is a width of plurality of frequency bins **235** of **Figure 2****.** As depicted, each curve of curves **1410** reaches steady state around 10%. When the change is within 10% of change of steady state, the value for quantity of peaks **1404** may be selected. As depicted, each of curves **1410** reaches within 10% of change of steady state between 8 peaks and 10 peaks. A value for quantity of frequency peaks **1338** of **Figure 13** may desirably be in the range of 8 to 10 peaks. In other illustrative examples, other desirable quantities of peaks may be determined depending on the applicable difference in change graph.

In some illustrative examples, width of frequency bins **1334** of **Figure 13** may be decided from **Figure 14****.** In some illustrative examples, options for width of frequency bins **1334** of **Figure 13** may be eliminated using **Figure 14****.** For example, window = 0.1 seconds and window = 0.05 seconds may be eliminated from **Figure 14****.** Window = 0.1 seconds and window = 0.05 seconds are substantially on top of one another. If a plot of the difference as a function of frequency bin width is created, the difference would be at steady state by frequency bin size 0.05.

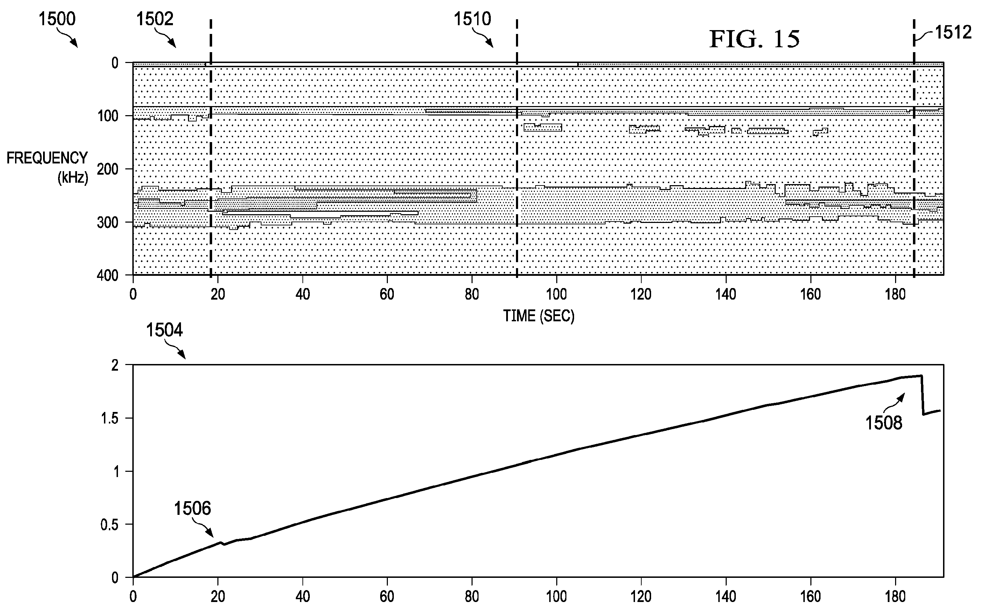

Turning now to **Figure 15****,** an illustration of a frequency distribution function time evolution image beside a normalized loading curve is depicted in accordance with an illustrative embodiment. View **1500** includes frequency distribution function time evolution image **1502** and normalized loading curve **1504.** Normalized loading curve **1504** includes dip **1506** and dip **1508.** Each of dip **1506** and dip **1508** indicates changes to the object being tested.

Normalized loading curve **1504** may be used to perform a validation step confirming that all instances of material changes in normalized loading curve **1504** are also present in frequency distribution function time evolution image **1502.** Frequency distribution function time evolution image **1502** captures changes displayed in normalized loading curve **1504** and additional changes not detected by normalized loading curve **1504.**

In some illustrative examples, clusters, such as plurality of clusters **242** of **Figure 2****,** may be selected by an operator based on at least one of normalized loading curve **1504** or frequency distribution function time evolution image **1502.** In some illustrative examples, a quantity of clusters, such as quantity of clusters **1348** of **Figure 13** may be selected by an operator based on at least one of normalized loading curve **1504** or frequency distribution function time evolution image **1502.**

As depicted, four clusters, clusters **1510,** are separated by dashed lines **1512.** As depicted, dashed lines **1512** extend through dip **1506** and dip **1508.**

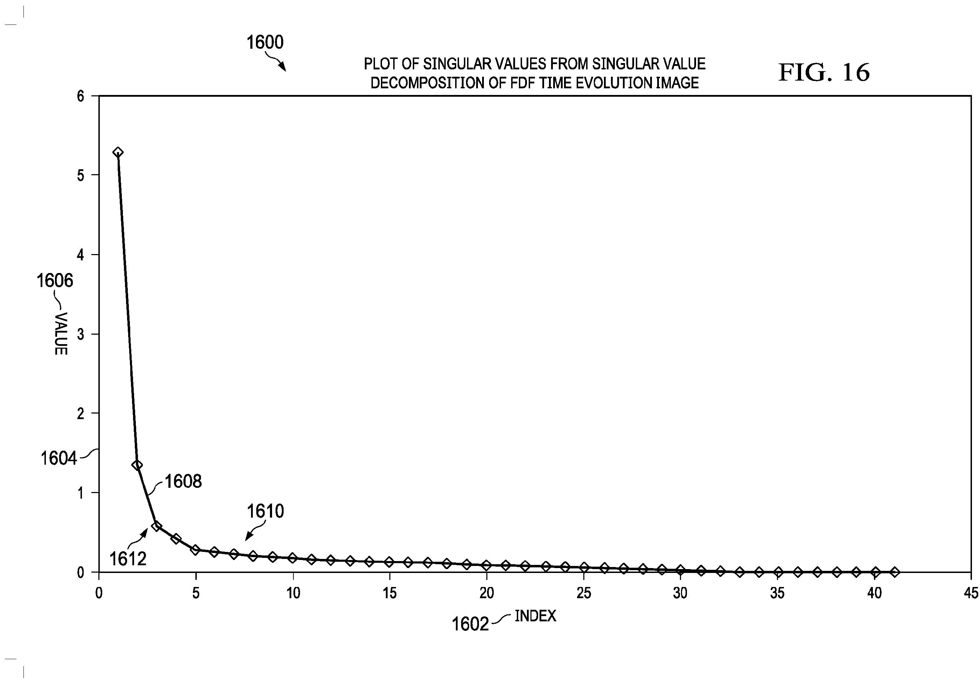

In some illustrative examples, a quantity of clusters, such as quantity of clusters **1348,** may be selected automatically by an analyzer module, such as analyzer module **214** of **Figures 2** and **13****.** When an analyzer module selects a quantity of clusters, the analyzer module performs calculations using data from frequency distribution function time evolution image **1502.** Turning now to **Figure 16****,** an illustration of a plot of singular values from singular value decomposition of a frequency distribution function time evolution image is depicted in accordance with an illustrative embodiment. In some illustrative examples, plot of singular values **1600** is a physical implementation of results of singular value decomposition **1350** of **Figure 13****.** Plot of singular values **1600** may be used to select quantity of clusters **1348** of **Figure 13****.** Analyzer module **214** of **Figures 2** and **13** may perform calculations to create plot of singular values **1600** and determine quantity of clusters **1348.** A quantity of clusters is selected after selecting each of width of frequency bins **1334,** value of bin width **1336,** and quantity of frequency peaks **1338.**

Plot of singular values **1600** has x-axis **1602** and y-axis **1604.** X-axis **1602** is a series of whole numerals for a quantity of clusters. Y-axis **1604** is singular values **1606** from singular value decomposition of frequency distribution function time evolution image **1502** of **Figure 15****.**

As depicted, line **1608** extends through plurality of points **1610.** Line **1608** has curved portion **1612.** In some illustrative examples, the quantity of clusters is selected from entries of plurality of points **1610** within curved portion **1612** of plot of singular values **1600.**

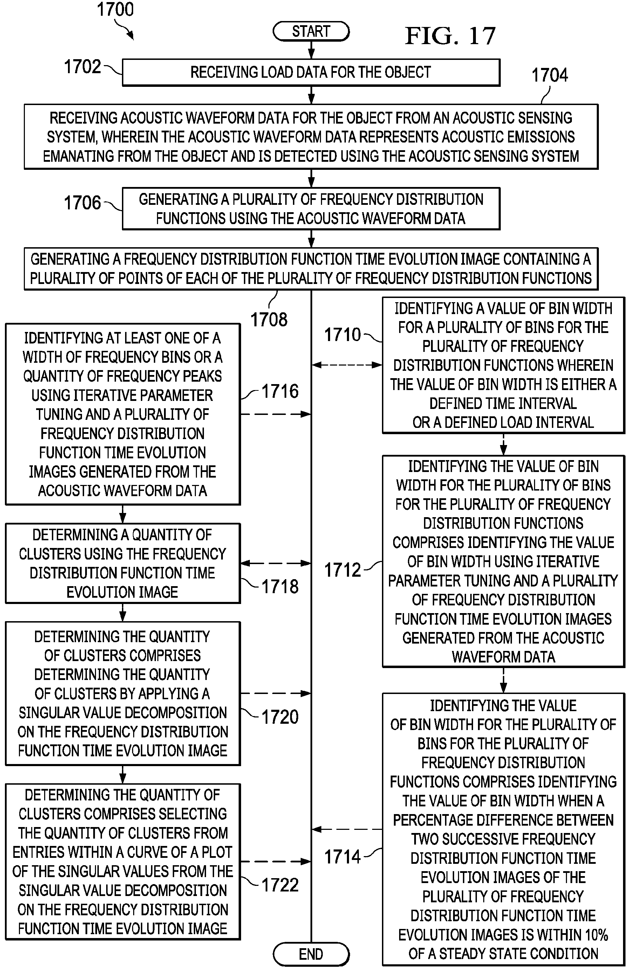

Turning now to **Figure 17****,** an illustration of a flowchart of a method for analyzing an object using acoustic waves is depicted in accordance with an illustrative embodiment. Method **1700** may be implemented in test environment **100** of **Figure 1****.** Method **1700** may be implemented using acoustic sensing system **204** and analyzer module **214** of computer system **216** of **Figures 2** and **13****.**

Method **1700** is a method for analyzing an object using acoustic waves. Method **1700** receives load data for the object (operation **1702).** Method **1700** receives acoustic waveform data for the object from an acoustic sensing system, wherein the acoustic waveform data represents acoustic emissions emanating from the object and is detected using the acoustic sensing system (operation **1704).** Method **1700** generates a plurality of frequency distribution functions using the acoustic waveform data (operation **1706).** Method **1700** generates a frequency distribution function time evolution image containing a plurality of points of each of the plurality of frequency distribution functions (operation **1708).** Afterwards, method **1700** terminates.

In some illustrative examples, method **1700** generates a frequency distribution function time evolution image containing all data of each of the plurality of frequency distribution functions. In some illustrative examples, the frequency distribution function time evolution image allows an operator to assess a structural integrity of the object. In some illustrative examples, the frequency distribution function time evolution image is used by an analyzer module to assess the structural integrity of the object. In some illustrative examples, the frequency distribution function time evolution image or the data contained in the frequency distribution function time evolution image allows the analyzer module to identify structural changes in the object previously unidentifiable by an operator using frequency plots containing a single point for each waveform of the acoustic waveform data.

Method **1700** identifies a value of bin width for a plurality of bins for the plurality of frequency distribution functions, wherein the value of bin width is either a defined time interval or a defined load interval (operation **1710)**. Identifying the value of bin width for the plurality of bins for the plurality of frequency distribution functions comprises identifying the value of bin width using iterative parameter tuning and a plurality of frequency distribution function time evolution images generated from the acoustic waveform data (operation **1712)**. Identifying the value of bin width for the plurality of bins for the plurality of frequency distribution functions comprises identifying the value of bin width when a percentage difference between two successive frequency distribution function time evolution images of the plurality of frequency distribution function time evolution images is within 10% of change of a steady state condition (operation **1714).**

In some illustrative examples, method **1700** identifies at least one of a width of frequency bins or a quantity of frequency peaks using iterative parameter tuning and a plurality of frequency distribution function time evolution images generated from the acoustic waveform data (operation **1716).**

In some illustrative examples, method **1700** determines a quantity of clusters using the frequency distribution function time evolution image (operation **1718).** In some of these illustrative examples, method **1700** determines the quantity of clusters comprises determining the quantity of clusters by applying a singular value decomposition on the frequency distribution function time evolution image (operation **1720).** In some of these illustrative examples, determining the quantity of clusters comprises selecting the quantity of clusters from entries within a curved portion of a plot of the singular values from the singular value decomposition on the frequency distribution function time evolution image (operation **1722).**

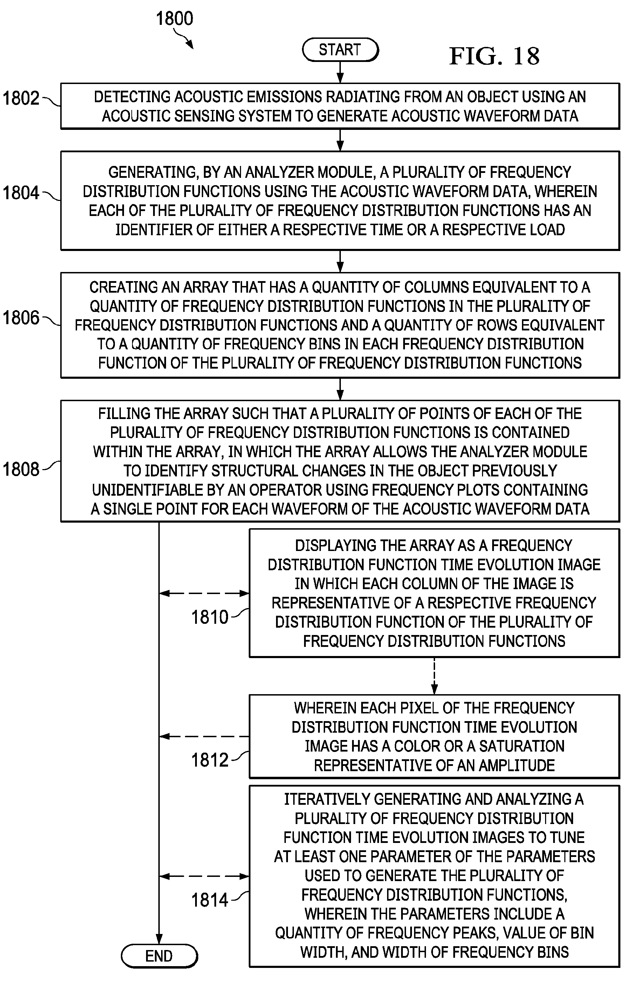

Turning now to **Figure 18****,** an illustration of a flowchart of a method for creating an array for analysis is depicted in accordance with an illustrative embodiment. Method **1800** may be implemented in test environment **100** of **Figure 1****.** Method **1800** may be implemented using acoustic sensing system **204** and analyzer module **214** of computer system **216** of **Figures 2** and **13****.**

Method **1800** detects acoustic emissions radiating from an object using an acoustic sensing system to generate acoustic waveform data (operation **1802).** Method **1800** generates, by an analyzer module, a plurality of frequency distribution functions using the acoustic waveform data, wherein each of the plurality of frequency distribution functions has an identifier of either a respective time or a respective load (operation **1804).** Method **1800** creates an array that has a quantity of columns equivalent to a quantity of frequency distribution functions in the plurality of frequency distribution functions and a quantity of rows equivalent to a quantity of frequency bins in each frequency distribution function of the plurality of frequency distribution functions (operation **1806).** Method **1800** fills the array such that a plurality of points of each of the plurality of frequency distribution functions is contained within the array, in which the array allows the analyzer module to identify structural changes in the object previously unidentifiable by an operator using frequency plots containing a single point for each waveform of the acoustic waveform data (operation **1808).** Afterwards, method **1800** terminates.

In some illustrative examples, method **1800** fills the array such that all data of each of the plurality of frequency distribution functions is contained within the array. In some illustrative examples, method **1800** displays the array as a frequency distribution function time evolution image in which each column of the image is representative of a respective frequency distribution function of the plurality of frequency distribution functions (operation **1810).** In some illustrative examples, in method **1800,** each pixel of the frequency distribution function time evolution image has a color or a saturation representative of an amplitude (operation **1812).**

In some illustrative examples, method **1800** iteratively generates and analyzes a plurality of frequency distribution function time evolution images to tune at least one parameter of the parameters used to generate the plurality of frequency distribution functions, wherein the parameters include a quantity of frequency peaks, value of bin width, and width of frequency bins (operation **1814).**

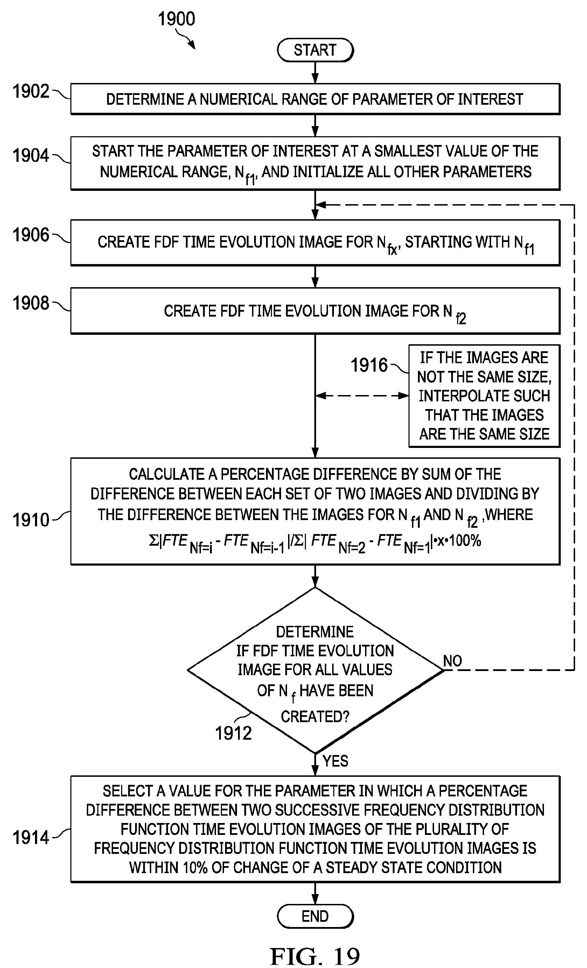

Turning now to **Figure 19****,** an illustration of a flowchart of a method for tuning parameters is depicted in accordance with an illustrative embodiment. Method **1900** may be implemented in test environment **100** of **Figure 1****.** Method **1900** may be implemented using acoustic sensing system **204** and analyzer module **214** of computer system **216** of **Figures 2** and **13****.** Method **1900** is a method for tuning a parameter of interest. Any desirable parameter of width of frequency bins **1334,** value of bin width **1336,** or quantity of frequency peaks **1338** of **Figure 13** may be tuned using method **1900.**

Method **1900** determines a numerical range of a parameter of interest (operation **1902).** Method **1900** starts the parameter of interest at a smallest value of the numerical range, N_{f1}, and initialize all other parameters (operation **1904).** Method **1900** creates a frequency distribution function time evolution image for N_{fx}, starting with N_{f1} (operation **1906).** Method **1900** creates a frequency distribution function time evolution image for N_{f2} (operation **1908)**.

Method **1900** calculates a percentage difference by sum of the difference between each set of two images and dividing by the different between the images for N_{f1} and N_{f2}, where Σ|*FTE_{Nf=i} - FTE*_{*Nf*=*i*-1}|/Σ|*FTE*_{*Nf*=2} - *FTE*_{*Nf*=1}| × 100% (operation **1910)**. Method **1900** determines if frequency distribution function time evolution images for all values of N_{f} have been created (operation **1912).** If not, operations **1906** and **1908** are repeated until all values of N_{f} have a frequency distribution function time evolution image. Method **1900** selects a value for the parameter in which a percentage difference between two successive frequency distribution function time evolution images of the plurality of frequency distribution function time evolution images is within 10% of change of a steady state condition (operation **1914).** Afterwards, method **1900** terminates.

In some illustrative examples, if the images are not the same size, method **1900** interpolates such that the images are the same size (operation **1916).**

The flowcharts and block diagrams in the different depicted embodiments illustrate the architecture, functionality, and operation of some possible implementations of apparatus and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added, in addition to the illustrated blocks, in a flowchart or block diagram.

In some illustrative examples, not all blocks of method **1700,** method **1800,** or method **1900** are performed.

As an example, operations **1810** through **1814** of **Figure 18** are optional. As a further example, operation **1916** of **Figure 19** is optional.

## Claims

1. An apparatus comprising:
an acoustic sensing system (204) comprising an acoustic sensor (208), wherein the acoustic sensing system (204) is arranged to detect acoustic emissions (206) of an object (200) and to generate acoustic waveform data (212) for the acoustic emissions (206) detected; and
an analyzer module (214) implemented in a computer system (216), arranged to:
receive load data (218) indicating a load applied to or experienced by the object (200) over time and the acoustic waveform data (212) for the object (200),
generate a plurality of frequency distribution functions (228) using the acoustic waveform data (212), wherein the plurality of frequency distribution functions includes one frequency distribution function for each bin in a plurality of bins (224), wherein a frequency distribution function in the plurality of frequency distribution functions is created by dividing a selected frequency range into a plurality of frequency bins, wherein a frequency bin includes either a count of a plurality of frequency peaks that fall within the frequency bin or an accumulation of energy at the frequency bin computed using the acoustic waveform data; and
generate a frequency distribution function time evolution image (1200, 1300) containing a plurality of points of each of the plurality of frequency distribution functions (228),
process the acoustic waveform data (212) relative to the load data (218) to identify, for each bin in the plurality of bins (224), a set of waveforms that fall within that bin using the acoustic waveform data (212); and further wherein:
the analyzer module (214) is arranged to identify a value of bin width for the plurality of bins (224) for the plurality of frequency distribution functions (228) using iterative parameter tuning and a plurality of frequency distribution function time evolution images generated from the acoustic waveform data (212),
wherein the analyzer module (214) is arranged to identify the value of bin width when a percentage difference between two successive frequency distribution function time evolution images of the plurality of frequency distribution function time evolution images (1344) is within 10% of the percentage difference between the two successive frequency distribution function time evolution images in a steady state condition, wherein the steady state condition is defined as a predefined percentage difference between a pair of successive frequency distribution function time evolution images,
wherein the value of bin width is either a defined time interval or a defined load interval,
wherein the analyzer module is arranged to create a plurality of clusters (242) using the plurality of frequency distribution functions (228), wherein:
a cluster in plurality of clusters (242) is a grouping of frequency distribution functions from the plurality of frequency distribution functions (228); and
each cluster in the plurality of clusters (242) corresponds to a structural change that affects structural integrity of the object (200).

2. The apparatus of claim 1, wherein the plurality of frequency distribution functions (228) take the form of a plurality of frequency histograms (230).

3. The apparatus of any preceding claim, wherein the analyzer module (214) is arranged to identify a quantity of frequency peaks (1338) using iterative parameter tuning (1340) and a plurality of frequency distribution function time evolution images (1344) generated from the acoustic waveform data (212).

4. The apparatus of any preceding claim, wherein the analyzer module (214) is arranged to determine a quantity of clusters (1348) using the frequency distribution function time evolution image (1300).

5. The apparatus of claim 4, wherein the analyzer module (214) is arranged to determine the quantity of clusters (1348) by applying a singular value decomposition on the frequency distribution function time evolution image (1300).

6. The apparatus of claim 5, wherein the quantity of clusters (1348) is selected from entries within a curved portion of a plot of the singular values from the singular value decomposition (1350) on the frequency distribution function time evolution image (1300).

7. A method comprising:
detecting acoustic emissions radiating from an object (200) using an acoustic sensing system (204) to generate acoustic waveform data (212);
receiving, by the analyzer module, load data (218) indicating a load applied to or experienced by the object (200) over time;
generating, by an analyzer module (214), a plurality of frequency distribution functions (228) using the acoustic waveform data (212), wherein the plurality of frequency distribution functions includes one frequency distribution function for each bin in a plurality of bins (224), wherein a frequency distribution function in the plurality of frequency distribution functions is created by dividing a selected frequency range into a plurality of frequency bins, wherein each of the plurality of frequency distribution functions (228) has an identifier of either a respective time or a respective load applied to or experienced by the object (200);
creating an array (1312) that has a quantity of columns (1314) equivalent to a quantity (1318) of frequency distribution functions in the plurality of frequency distribution functions (228) and a quantity of rows (1316) equivalent to a quantity of frequency bins (1320) in each frequency distribution function of the plurality of frequency distribution functions (228), wherein a frequency bin includes either a count of a plurality of frequency peaks that fall within the frequency bin or an accumulation of energy at the frequency bin computed using the acoustic waveform data,;
processing the acoustic waveform data (212) relative to the load data (218) to identify, for each bin in the plurality of bins (224), a set of waveforms that fall within that bin using the acoustic waveform data (212); and
filling the array such that a plurality of points of each of the plurality of frequency distribution functions (228) is contained within the array (1312), in which the array (1312) allows the analyzer module to identify structural changes in the object (200) using frequency plots containing a single point for each waveform in the set of waveforms of the acoustic waveform data (212),
identifying, by the analyzer module (214), a value of bin width for the plurality of bins (224) for the plurality of frequency distribution functions (228) using iterative parameter tuning and a plurality of frequency distribution function time evolution images generated from the acoustic waveform data (212),
wherein the identifying is done when a percentage difference between two successive frequency distribution function time evolution images of the plurality of frequency distribution function time evolution images (1344) is within 10% of the percentage difference between the two successive frequency distribution function time evolution images in a steady state condition, wherein the steady state condition is defined as a predefined percentage difference between a pair of successive frequency distribution function time evolution images,
wherein the value of bin width is either a defined time interval or a defined load interval, wherein the method further comprises:
creating a plurality of clusters (242) using the plurality of frequency distribution functions (228), wherein:
a cluster in plurality of clusters (242) is a grouping of frequency distribution functions from the plurality of frequency distribution functions (228); and
each cluster in the plurality of clusters (242) corresponds to a structural change that affects structural integrity of the object (200).

8. The method of claim 7 further comprising:
displaying the array as a frequency distribution function time evolution image (1200, 1300) in which each column of the frequency distribution function time evolution image (1200, 1300) is representative of a respective frequency distribution function of the plurality of frequency distribution functions (228).

9. The method of claim 8, wherein each pixel of the frequency distribution function time evolution image (1200, 1300) has a color or a saturation representative of an amplitude.

10. The method of any of claims 7 to 9, wherein the plurality of frequency distribution functions (228) take the form of a plurality of frequency histograms (230).

11. The method of any of claims 7 to 10, wherein the width of the frequency bins is set at a value in the range of 20 - 50 kHz to tune a value of the bin width and quantity of frequency peaks.

## Patentansprüche

1. Einrichtung, umfassend:
ein akustisches Erfassungssystem (204), das einen akustischen Sensor (208) umfasst, wobei das akustische Erfassungssystem (204) dazu eingerichtet ist, akustische Emissionen (206) eines Objekts (200) zu detektieren und akustische Wellenformdaten (212) für die detektierte akustische Emission (206) zu erzeugen; und
ein Analysatormodul (214), das in einem Computersystem (216) implementiert wird und eingerichtet ist zum:
Empfangen von Lastdaten (218), die eine Last, die im Laufe der Zeit an das Objekt (200) angelegt oder von diesem erfahren wird, und die akustischen Wellenformdaten (212) für das Objekt (200) angeben,
Erzeugen einer Vielzahl von Frequenzverteilungsfunktionen (228) unter Verwendung der akustischen Wellenformdaten (212), wobei die Vielzahl von Frequenzverteilungsfunktionen eine Frequenzverteilungsfunktion für jedes Bin in einer Vielzahl von Bins (224) beinhaltet, wobei eine Frequenzverteilungsfunktion in der Vielzahl von Frequenzverteilungsfunktionen durch Teilen eines ausgewählten Frequenzbereichs in eine Vielzahl von Frequenz-Bins erzeugt wird, wobei ein Frequenz-Bin entweder eine Zählung einer Vielzahl von Frequenzspitzen, die in das Frequenz-Bin fallen, oder eine Akkumulation von Energie beim Frequenz-Bin, die unter Verwendung der akustischen Wellenformdaten berechnet wird, beinhaltet; und
Erzeugen eines zeitlichen Entwicklungsbildes (1200, 1300) der Frequenzverteilungsfunktion, das eine Vielzahl von Punkten von jeder der Vielzahl von Frequenzverteilungsfunktionen (228) enthält,
Verarbeiten der akustischen Wellenformdaten (212) relativ zu den Lastdaten (218), um für jedes Bin in der Vielzahl von Bins (224) einen Satz von Wellenformen, die in dieses Bin fallen, unter Verwendung der akustischen Wellenformdaten (212) zu identifizieren; und ferner wobei:
das Analysatormodul (214) dazu eingerichtet ist, einen Wert der Bin-Breite für die Vielzahl von Bins (224) für die Vielzahl von Frequenzverteilungsfunktionen (228) unter Verwendung iterativer Parameterabstimmung und einer Vielzahl von zeitlichen Entwicklungsbildern der Frequenzverteilungsfunktion, die aus den akustischen Wellenformdaten (212) erzeugt werden, zu identifizieren, wobei das Analysatormodul (214) dazu eingerichtet ist, den Wert der Bin-Breite zu identifizieren, wenn eine prozentuale Differenz zwischen zwei aufeinanderfolgenden zeitlichen Entwicklungsbildern der Frequenzverteilungsfunktion der Vielzahl von zeitlichen Entwicklungsbildern (1344) der Frequenzverteilungsfunktion innerhalb 10 % der prozentualen Differenz zwischen den beiden aufeinanderfolgenden zeitlichen Entwicklungsbildern der Frequenzverteilungsfunktion in einem Steady-State-Zustand liegt, wobei der Steady-State-Zustand als eine vordefinierte prozentuale Differenz zwischen einem Paar aufeinanderfolgender zeitlicher Entwicklungsbilder der Frequenzverteilungsfunktion definiert ist,
wobei der Wert der Bin-Breite entweder ein definiertes Zeitintervall oder ein definiertes Lastintervall ist,
wobei das Analysatormodul dazu eingerichtet ist, eine Vielzahl von Clustern (242) unter Verwendung der Vielzahl von Frequenzverteilungsfunktionen (228) zu erzeugen, wobei:
ein Cluster in der Vielzahl von Clustern (242) eine Gruppierung von Frequenzverteilungsfunktionen aus der Vielzahl von Frequenzverteilungsfunktionen (228) ist; und
jedes Cluster in der Vielzahl von Clustern (242) einer strukturellen Änderung entspricht, die die strukturelle Integrität des Objekts (200) beeinflusst.

2. Einrichtung nach Anspruch 1, wobei die Vielzahl von Frequenzverteilungsfunktionen (228) die Form einer Vielzahl von Frequenzhistogrammen (230) annimmt.

3. Einrichtung nach einem der vorstehenden Ansprüche, wobei das Analysatormodul (214) dazu eingerichtet ist, eine Menge an Frequenzspitzen (1338) unter Verwendung iterativer Parameterabstimmung (1340) und einer Vielzahl von zeitlichen Entwicklungsbildern (1344) der Frequenzverteilungsfunktion, die aus den akustischen Wellenformdaten (212) erzeugt werden, zu identifizieren.

4. Einrichtung nach einem der vorstehenden Ansprüche, wobei das Analysatormodul (214) dazu eingerichtet ist, eine Menge an Clustern (1348) unter Verwendung des zeitlichen Entwicklungsbildes (1300) der Frequenzverteilungsfunktion zu bestimmen.

5. Einrichtung nach Anspruch 4, wobei das Analysatormodul (214) dazu eingerichtet ist, die Menge an Clustern (1348) durch Anwenden einer Singulärwertzerlegung am zeitlichen Entwicklungsbild (1300) der Frequenzverteilungsfunktion zu bestimmen.

6. Einrichtung nach Anspruch 5, wobei die Menge an Clustern (1348) aus Einträgen in einem gekrümmten Abschnitt eines Plots der Singulärwerte aus der Singulärwertzerlegung (1350) am zeitlichen Entwicklungsbild (1300) der Frequenzverteilungsfunktion ausgewählt wird.

7. Verfahren, umfassend:
Detektieren akustischer Emissionen, die von einem Objekt (200) abgestrahlt werden, unter Verwendung eines akustischen Erfassungssystems (204), um akustische Wellenformdaten (212) zu erzeugen;
Empfangen, durch das Analysatormodul, von Lastdaten (218), die eine Last angeben, die im Laufe der Zeit an das Objekt (200) angelegt oder von diesem erfahren wird; Erzeugen, durch das Analysatormodul (214), einer Vielzahl von Frequenzverteilungsfunktionen (228) unter Verwendung der akustischen Wellenformdaten (212), wobei die Vielzahl von Frequenzverteilungsfunktionen eine Frequenzverteilungsfunktion für jedes Bin in einer Vielzahl von Bins (224) beinhaltet, wobei eine Frequenzverteilungsfunktion in der Vielzahl von Frequenzverteilungsfunktionen durch Teilen eines ausgewählten Frequenzbereichs in eine Vielzahl von Frequenz-Bins erzeugt wird, wobei jede der Vielzahl von Frequenzverteilungsfunktionen (228) eine Kennung von entweder einer jeweiligen Zeit oder einer jeweiligen Last, die am Objekt (200) angelegt oder von diesem erfahren wird, aufweist;
Erzeugen eines Arrays (1312), das eine Menge von Spalten (1314) äquivalent zu einer Menge (1318) von Frequenzverteilungsfunktionen in der Vielzahl von Frequenzverteilungsfunktionen (228) und eine Menge von Zeilen (1316) äquivalent zu einer Menge von Frequenz-Bins (1320) in jeder Frequenzverteilungsfunktion der Vielzahl von Frequenzverteilungsfunktionen (228) aufweist, wobei ein Frequenz-Bin entweder eine Zählung einer Vielzahl von Frequenzspitzen, die in das Frequenz-Bin fallen, oder eine Akkumulation von Energie beim Frequenz-Bin, die unter Verwendung der akustischen Wellenformdaten berechnet wird, beinhaltet;
Verarbeiten der akustischen Wellenformdaten (212) relativ zu den Lastdaten (218), um für jedes Bin in der Vielzahl von Bins (224) einen Satz von Wellenformen, die in dieses Bin fallen, unter Verwendung der akustischen Wellenformdaten (212) zu identifizieren; und
Füllen des Arrays, sodass eine Vielzahl von Punkten von jeder der Vielzahl von Frequenzverteilungsfunktionen (228) im Array (1312) enthalten ist, wobei das Array (1312) dem Analysatormodul ermöglicht, strukturelle Änderungen im Objekt (200) unter Verwendung von Frequenzplots zu identifizieren, die einen einzelnen Punkt für jede Wellenform im Satz von Wellenformen der akustischen Wellenformdaten (212) enthalten,
Identifizieren, durch das Analysatormodul (214), eines Werts der Bin-Breite für die Vielzahl von Bins (224) für die Vielzahl von Frequenzverteilungsfunktionen (228) unter Verwendung iterativer Parameterabstimmung und einer Vielzahl von zeitlichen Entwicklungsbildern der Frequenzverteilungsfunktion, die aus den akustischen Wellenformdaten (212) erzeugt werden,
wobei das Identifizieren durchgeführt wird, wenn eine prozentuale Differenz zwischen zwei aufeinanderfolgenden zeitlichen Entwicklungsbildern der Frequenzverteilungsfunktion der Vielzahl von zeitlichen Entwicklungsbildern (1344) der Frequenzverteilungsfunktion innerhalb 10 % der prozentualen Differenz zwischen den beiden aufeinanderfolgenden zeitlichen Entwicklungsbildern der Frequenzverteilungsfunktion in einem Steady-State-Zustand liegt, wobei der Steady-State-Zustand als eine vordefinierte prozentuale Differenz zwischen einem Paar aufeinanderfolgender zeitlicher Entwicklungsbilder der Frequenzverteilungsfunktion definiert ist,
wobei der Wert der Bin-Breite entweder ein definiertes Zeitintervall oder ein definiertes Lastintervall ist, wobei das Verfahren ferner umfasst:
Erzeugen einer Vielzahl von Clustern (242) unter Verwendung der Vielzahl von Frequenzverteilungsfunktionen (228), wobei:
ein Cluster in der Vielzahl von Clustern (242) eine Gruppierung von Frequenzverteilungsfunktionen aus der Vielzahl von Frequenzverteilungsfunktionen (228) ist; und
jedes Cluster in der Vielzahl von Clustern (242) einer strukturellen Änderung entspricht, die die strukturelle Integrität des Objekts (200) beeinflusst.

8. Verfahren nach Anspruch 7, ferner umfassend:
Anzeigen des Arrays als ein zeitliches Entwicklungsbild (1200, 1300) der Frequenzverteilungsfunktion, wobei jede Spalte des zeitlichen Entwicklungsbildes (1200, 1300) der Frequenzverteilungsfunktion eine jeweilige Frequenzverteilungsfunktion der Vielzahl von Frequenzverteilungsfunktionen (228) repräsentiert.

9. Verfahren nach Anspruch 8, wobei jedes Pixel des zeitlichen Entwicklungsbildes (1200, 1300) der Frequenzverteilungsfunktion eine Farbe oder eine Sättigung aufweist, die eine Amplitude repräsentiert.

10. Verfahren nach einem der Ansprüche 7 bis 9, wobei die Vielzahl von Frequenzverteilungsfunktionen (228) die Form einer Vielzahl von Frequenzhistogrammen (230) annimmt.

11. Verfahren nach einem der Ansprüche 7 bis 10, wobei die Breite der Frequenz-Bins bei einem Wert im Bereich von 20 - 50 kHz festgelegt ist, um einen Wert der Bin-Breite und eine Menge von Frequenzspitzen abzustimmen.

## Revendications

1. Appareil comprenant :
un système de détection acoustique (204) comprenant un capteur acoustique (208), où le système de détection acoustique (204) est agencé pour détecter des émissions acoustiques (206) d'un objet (200) et pour générer des données de forme d'onde acoustique (212) pour les émissions acoustiques (206) détectées ; et
un module analyseur (214) mis en œuvre dans un système informatique (216), agencé pour :
recevoir des données de charge (218) indiquant une charge appliquée à l'objet (200), ou subie par celui-ci, au cours du temps et les données de forme d'onde acoustique (212) pour l'objet (200),
générer une pluralité de fonctions de distribution de fréquences (228) à l'aide des données de forme d'onde acoustique (212), où la pluralité de fonctions de distribution de fréquences comprend une fonction de distribution de fréquences pour chaque bin dans une pluralité de bins (224), où une fonction de distribution de fréquences dans la pluralité de fonctions de distribution de fréquences est créée en divisant une plage de fréquences sélectionnée en une pluralité de bins de fréquences, où un bin de fréquences comprend soit un certain nombre d'une pluralité de pics de fréquences qui tombent dans le bin de fréquences, soit une accumulation d'énergie au niveau du bin de fréquences calculée à l'aide des données de forme d'onde acoustique ; et
générer une image d'évolution temporelle de la fonction de distribution de fréquences (1200, 1300) contenant une pluralité de points de chacune de la pluralité de fonctions de distribution de fréquences (228),
traiter les données de forme d'onde acoustique (212) par rapport aux données de charge (218) afin d'identifier,
pour chaque bin de la pluralité de bins (224), un ensemble de formes d'onde qui tombent dans ce bin à l'aide des données de forme d'onde acoustique (212) ; et où, en outre :
le module analyseur (214) est agencé pour identifier une valeur de largeur de bin pour la pluralité de bins (224) pour la pluralité de fonctions de distribution de fréquences (228) en utilisant un réglage itératif de paramètre et une pluralité d'images d'évolution temporelle de fonctions de distribution de fréquences générées à partir des données de forme d'onde acoustique (212),
où le module analyseur (214) est agencé pour identifier la valeur de la largeur de bin lorsqu'une différence en pourcentage entre deux images d'évolution temporelle de fonctions de distribution de fréquences successives parmi la pluralité d'images d'évolution temporelle de fonctions de distribution de fréquences (1344) est comprise dans 10 % de la différence en pourcentage entre les deux images d'évolution temporelle de fonctions de distribution de fréquences successives dans une condition d'état stable, où la condition d'état stable est définie comme une différence en pourcentage prédéfinie entre une paire d'images d'évolution temporelle de fonctions de distribution de fréquences successives,
où la valeur de la largeur de bin est soit un intervalle de temps défini, soit un intervalle de charge défini,
où le module analyseur est agencé pour créer une pluralité de grappes (242) à l'aide de la pluralité de fonctions de distribution de fréquences (228), où :
une grappe dans la pluralité de grappes (242) est un regroupement de fonctions de distribution de fréquences provenant de la pluralité de fonctions de distribution de fréquences (228) ; et
chaque grappe dans la pluralité de grappes (242) correspond à un changement structurel qui affecte l'intégrité structurelle de l'objet (200).

2. Appareil selon la revendication 1, dans lequel la pluralité de fonctions de distribution de fréquences (228) se présente sous la forme d'une pluralité d'histogrammes de fréquences (230).

3. Appareil selon l'une quelconque des revendications précédentes, dans lequel le module analyseur (214) est agencé pour identifier une quantité de pics de fréquences (1338) à l'aide d'un réglage itératif des paramètres (1340) et d'une pluralité d'images d'évolution temporelle de fonctions de distribution de fréquences (1344) générées à partir des données de forme d'onde acoustique (212).

4. Appareil selon l'une quelconque des revendications précédentes, dans lequel le module analyseur (214) est agencé pour déterminer une quantité de grappes (1348) à l'aide de l'image d'évolution temporelle de fonction de distribution de fréquences (1300).

5. Appareil selon la revendication 4, dans lequel le module analyseur (214) est agencé pour déterminer la quantité de grappes (1348) en appliquant une décomposition en valeurs singulières à l'image d'évolution temporelle de la fonction de distribution de fréquences (1300).

6. Appareil selon la revendication 5, dans lequel la quantité de grappes (1348) est sélectionnée parmi des entrées situées dans une partie courbe d'un graphique des valeurs singulières issues de la décomposition en valeurs singulières (1350) sur l'image d'évolution temporelle de la fonction de distribution de fréquence (1300).

7. Procédé comprenant :
la détection d'émissions acoustiques rayonnant d'un objet (200) à l'aide d'un système de détection acoustique (204) afin de générer des données de forme d'onde acoustique (212) ;
la réception, par le module analyseur, de données de charge (218) indiquant une charge appliquée à l'objet (200), ou subie par celui-ci, au cours du temps ;
la génération, par un module analyseur (214), d'une pluralité de fonctions de distribution de fréquences (228) à l'aide des données de forme d'onde acoustique (212), où la pluralité de fonctions de distribution de fréquences comprend une fonction de distribution de fréquences pour chaque bin dans une pluralité de bins (224), où une fonction de distribution de fréquences dans la pluralité de fonctions de distribution de fréquences est créée en divisant une plage de fréquences sélectionnée en une pluralité de bins de fréquences, où chacune de la pluralité de fonctions de distribution de fréquences (228) a un identifiant soit d'un temps respectif, soit d'une charge respective appliquée à l'objet (200) ou subie par celui-ci ;
la création d'un tableau (1312) qui comporte un nombre de colonnes (1314) équivalent à un nombre (1318) de fonctions de distribution de fréquences dans la pluralité de fonctions de distribution de fréquences (228) et un nombre de lignes (1316) équivalent à une quantité de bins de fréquences (1320) dans chaque fonction de distribution de fréquences parmi la pluralité de fonctions de distribution de fréquences (228), où un bin de fréquences comprend soit un nombre d'une pluralité de pics de fréquences qui tombent dans le bin de fréquences, soit une accumulation d'énergie au niveau du bin de fréquences calculée à l'aide des données de forme d'onde acoustique ;
le traitement des données de forme d'onde acoustique (212) par rapport aux données de charge (218) afin d'identifier, pour chaque bin dans la pluralité de bins (224), un ensemble de formes d'onde qui tombent dans ce bin à l'aide des données de forme d'onde acoustique (212) ; et
le remplissage du tableau de telle sorte qu'une pluralité de points de chacune de la pluralité de fonctions de distribution de fréquences (228) soit contenue dans le tableau (1312), où le tableau (1312) permet au module analyseur d'identifier des changements structurels dans l'objet (200) à l'aide de graphiques de fréquence contenant un seul point pour chaque forme d'onde dans l'ensemble de formes d'onde des données de forme d'onde acoustique (212),
l'identification, par le module analyseur (214), d'une valeur de largeur de bin pour la pluralité de bins (224) pour la pluralité de fonctions de distribution de fréquences (228) en utilisant un réglage itératif de paramètre et une pluralité d'images d'évolution temporelle de fonctions de distribution de fréquences générées à partir des données de forme d'onde acoustique (212),
où l'identification est effectuée lorsqu'une différence en pourcentage entre deux images d'évolution temporelle de fonctions de distribution de fréquences successives parmi la pluralité d'images d'évolution temporelle de fonctions de distribution de fréquences (1344) est comprise dans 10 % de la différence en pourcentage entre les deux images d'évolution temporelle de fonctions de distribution de fréquences successives dans une condition d'état stable, où la condition d'état stable est définie comme une différence en pourcentage prédéfinie entre une paire d'images d'évolution temporelle de fonctions de distribution de fréquences successives,
où la valeur de la largeur de bin est soit un intervalle de temps défini, soit un intervalle de charge défini, où le procédé comprend en outre :
la création d'une pluralité de grappes (242) à l'aide de la pluralité de fonctions de distribution de fréquences (228), où :
une grappe dans la pluralité de grappes (242) est un regroupement de fonctions de distribution de fréquences provenant de la pluralité de fonctions de distribution de fréquences (228) ; et
chaque grappe dans la pluralité de grappes (242) correspond à un changement structurel qui affecte l'intégrité structurelle de l'objet (200).

8. Procédé de la revendication 7, comprenant en outre : l'affichage du tableau sous la forme d'une image d'évolution temporelle de la fonction de distribution de fréquences (1200, 1300) où chaque colonne de l'image d'évolution temporelle de la fonction de distribution de fréquences (1200, 1300) est représentative d'une fonction de distribution de fréquences respective parmi la pluralité de fonctions de distribution de fréquences (228).

9. Procédé selon la revendication 8, dans lequel chaque pixel de l'image d'évolution temporelle de la fonction de distribution de fréquences (1200, 1300) a une couleur ou une saturation représentative d'une amplitude.

10. Procédé selon l'une quelconque des revendications 7 à 9, dans lequel la pluralité de fonctions de distribution de fréquences (228) prend la forme d'une pluralité d'histogrammes de fréquences (230).

11. Procédé selon l'une quelconque des revendications 7 à 10, dans lequel la largeur des bins de fréquences est fixée à une valeur comprise entre 20 et 50 kHz afin d'ajuster une valeur de la largeur des bins et la quantité de pics de fréquences.
